(19) **Europäisches Patentamt / European Patent Office / Office européen des brevets**

(11) **EP 4 614 288 A1**

(12) **EUROPEAN PATENT APPLICATION**
published in accordance with Art. 153(4) EPC

(43) Date of publication:
**10.09.2025 Bulletin 2025/37**

(21) Application number: **23885493.9**

(22) Date of filing: **12.10.2023**

(51) International Patent Classification (IPC):
*G06F 3/0338* (2013.01)  *A63F 13/24* (2014.01)

(52) Cooperative Patent Classification (CPC):
**A63F 13/24; G06F 3/0338**

(86) International application number:
**PCT/JP2023/037057**

(87) International publication number:
**WO 2024/095731 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.10.2022 JP 2022174280**

(71) Applicant: **Sony Interactive Entertainment Inc.
Tokyo 108-0075 (JP)**

(72) Inventors:
• **KAWAI Keisuke
Tokyo 108-0075 (JP)**
• **SATO Kenichi
Tokyo 108-0075 (JP)**

(74) Representative: **D Young & Co LLP
3 Noble Street
London EC2V 7BQ (GB)**

(54) **OPERATION DEVICE, INFORMATION PROCESSING METHOD, AND COMPUTER PROGRAM**

(57)    A controller 6 includes a generation unit configured to generate operation information to be transmitted to an information processing apparatus 10. The generation unit acquires a value in an orthogonal coordinate system based on an operation amount of an analog input device (A). The generation unit converts the value in the orthogonal coordinate system to a value in another coordinate system (B). The generation unit converts the value in the another coordinate system on the basis of sensitivity of the analog input device indicated by setting information (C). The generation unit converts the value in the another coordinate system obtained after the conversion based on the sensitivity of the analog input device to a value in the orthogonal coordinate system that is to be set in the operation information (D).

FIG. 1

## Description

[Technical Field]

The present invention relates to a data processing technology, in particular, to an operation apparatus, an information processing method, and a computer program.

[Background Art]

Operation apparatuses including analog input devices such as analog sticks and trigger buttons have become widespread. Among operation apparatuses including analog input devices, there are operation apparatuses configured to support the adjustment of the sensitivity of the analog input devices.

[Summary]

[Technical Problem]

There is a demand for reducing the computation load for reflecting, in output values of an operation apparatus based on operations performed by a user on an analog input device, the sensitivity set for the analog input device.

It is an object of the present invention to provide a technology that reduces the computation load for reflecting, in output values of an operation apparatus based on operations performed by a user on an analog input device, the sensitivity set for the analog input device.

[Solution to Problem]

In order to solve the above-mentioned problem, an operation apparatus according to a certain aspect of the present invention includes an analog input device, a storage unit configured to store setting information associated with sensitivity of the analog input device, a generation unit configured to generate operation information based on an operation performed by a user on the analog input device, and a transmission unit configured to transmit the operation information generated by the generation unit to an external information processing apparatus. The generation unit is configured to (A) acquire a value in an orthogonal coordinate system based on an operation amount of the analog input device, (B) convert the value in the orthogonal coordinate system to a value in another coordinate system, (C) convert the value in the another coordinate system on the basis of the sensitivity of the analog input device indicated by the setting information, and (D) convert the value in the another coordinate system obtained after the conversion based on the sensitivity of the analog input device to a value in the orthogonal coordinate system that is to be set in the operation information.

Another aspect of the present invention is an operation apparatus. This apparatus includes an analog input device, a storage unit configured to store setting information associated with sensitivity of the analog input device, and a processor. The processor executes processing of generating operation information based on an operation performed by a user on the analog input device, and processing of transmitting the operation information generated to an external information processing apparatus. The processing of generating includes (A) acquiring a value in an orthogonal coordinate system based on an operation amount of the analog input device, (B) converting the value in the orthogonal coordinate system to a value in another coordinate system, (C) converting the value in the another coordinate system on the basis of the sensitivity of the analog input device indicated by the setting information, and (D) converting the value in the another coordinate system obtained after the conversion based on the sensitivity of the analog input device to a value in the orthogonal coordinate system that is to be set in the operation information.

Still another aspect of the present invention is an information processing method. This method executed by an operation apparatus that includes an analog input device and a storage unit configured to store setting information associated with sensitivity of the analog input device includes a step of generating operation information based on an operation performed by a user on the analog input device and a step of transmitting the operation information generated in the step of generating to an external information processing apparatus. The step of generating includes (A) acquiring a value in an orthogonal coordinate system based on an operation amount of the analog input device, (B) converting the value in the orthogonal coordinate system to a value in another coordinate system, (C) converting the value in the another coordinate system on the basis of the sensitivity of the analog input device indicated by the setting information, and (D) converting the value in the another coordinate system obtained after the conversion based on the sensitivity of the analog input device to a value in the orthogonal coordinate system that is to be set in the operation information.

Note that any combination of the above components as well as modes obtained by converting the expressions of the present invention between systems, computer programs, recording media having stored therein computer programs, or the like are also effective as aspects of the present invention.

[Advantageous Effect of Invention]

According to the present invention, it is possible to reduce the computation load for reflecting, in output values of the operation apparatus based on operations performed by the user on the analog input device, the sensitivity set for the analog input device.

[Brief Description of Drawings]

[FIG. 1]

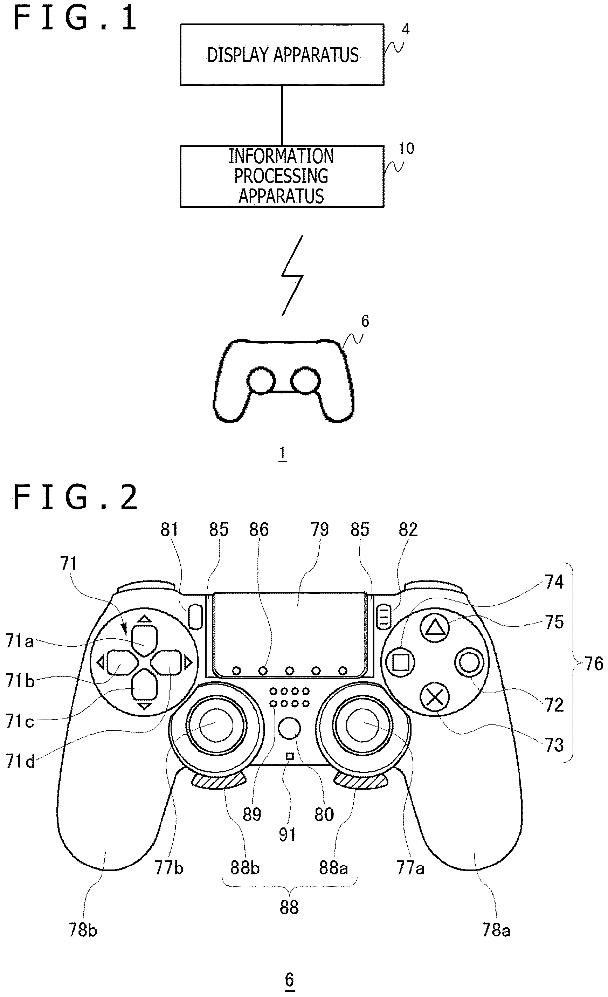

FIG. 1 is a diagram illustrating an information processing system according to an embodiment.
[FIG. 2]
FIG. 2 is a view illustrating the upper surface of a controller.
[FIG. 3]

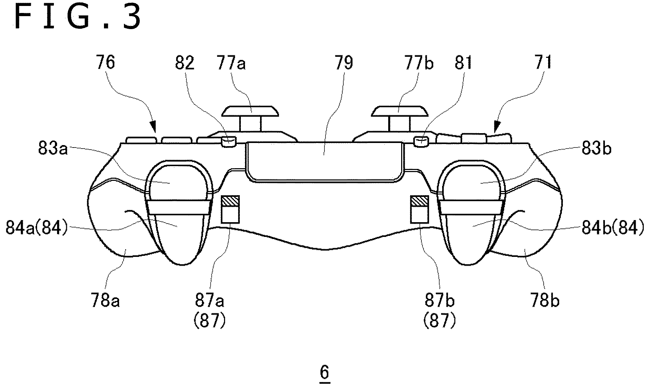

FIG. 3 is a view illustrating the rear-side side surface of the controller.
[FIG. 4]

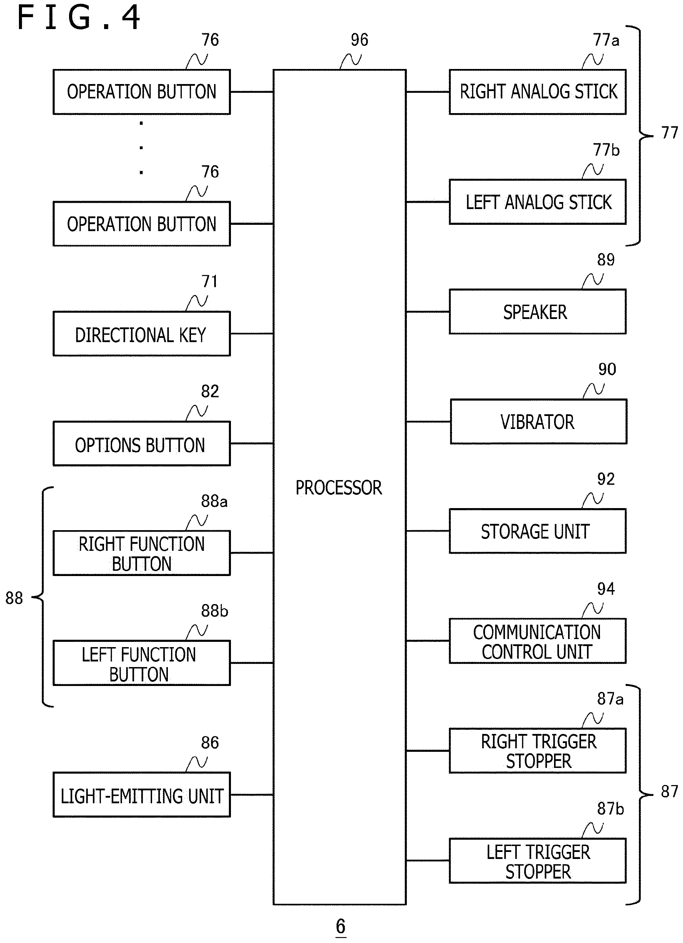

FIG. 4 is a diagram illustrating a hardware configuration of the controller.
[FIG. 5]

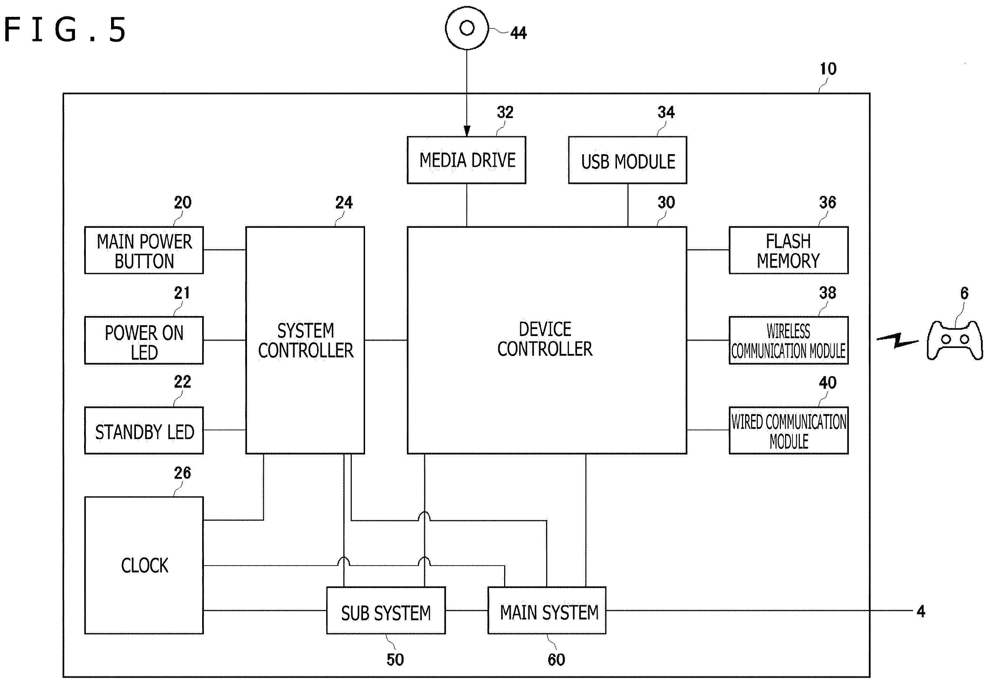

FIG. 5 is a diagram illustrating a hardware configuration of an information processing apparatus.
[FIG. 6]

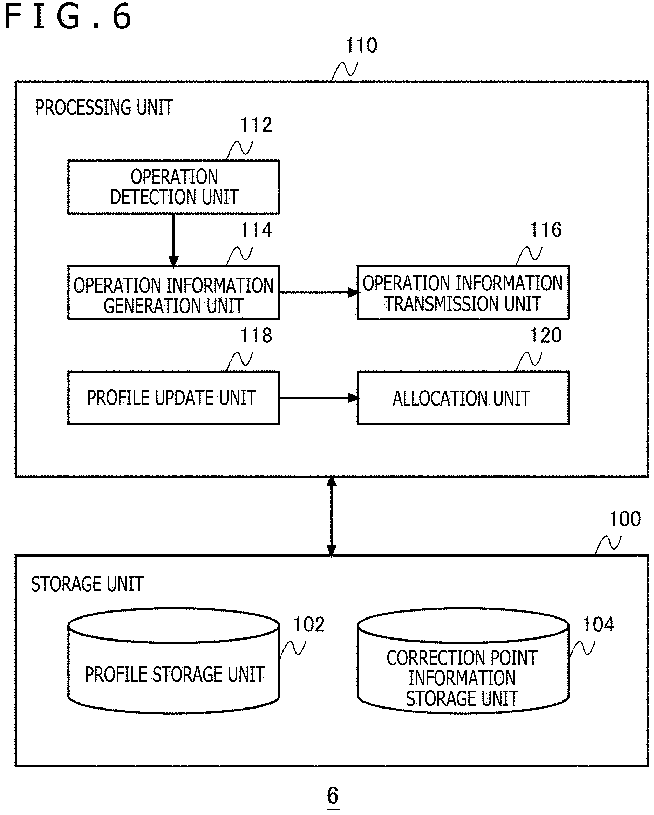

FIG. 6 is a block diagram illustrating functional blocks of the controller.
[FIG. 7]

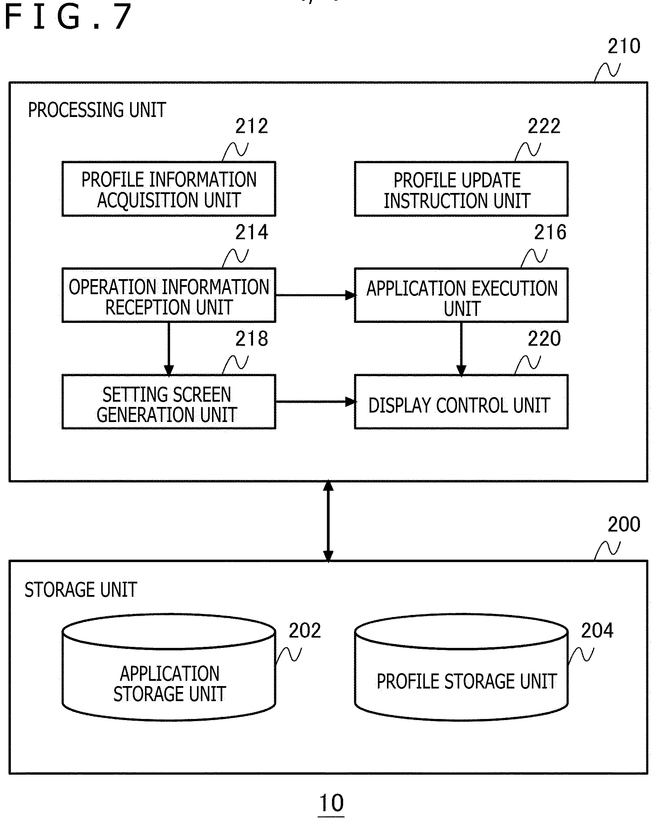

FIG. 7 is a block diagram illustrating functional blocks of the information processing apparatus.
[FIG. 8]

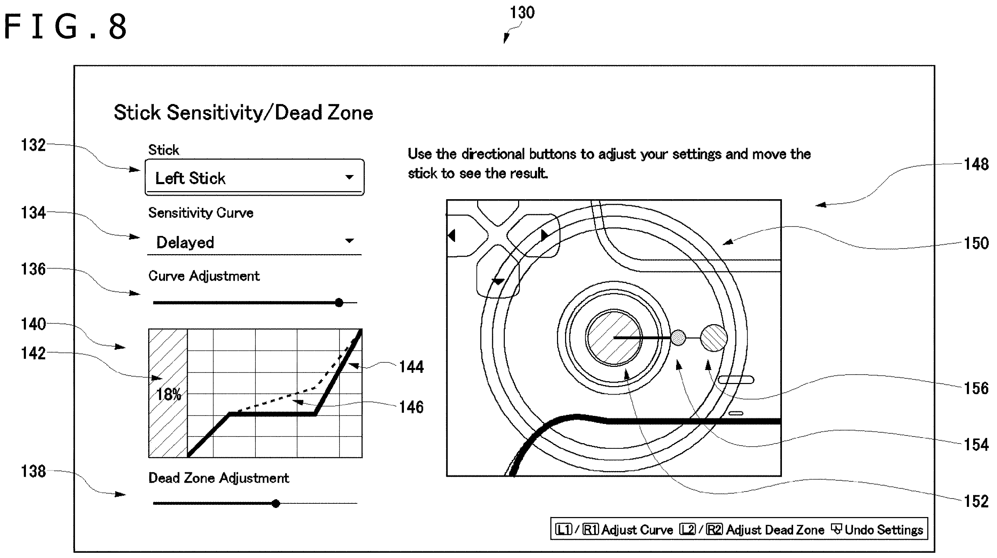

FIG. 8 is a diagram illustrating an example of an analog stick setting screen.
[FIG. 9]

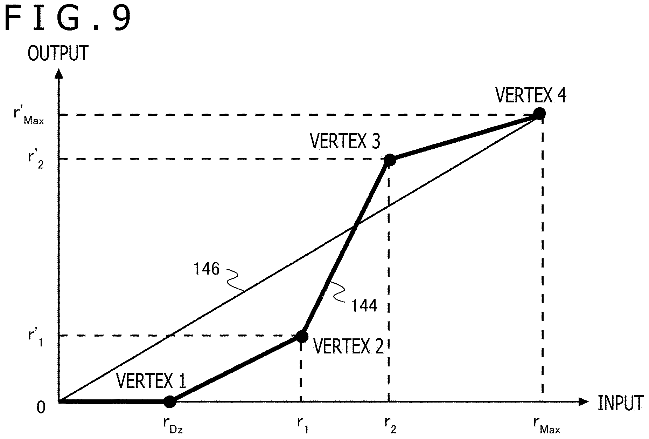

FIG. 9 is a diagram illustrating an example of a sensitivity curve.
[FIG. 10]

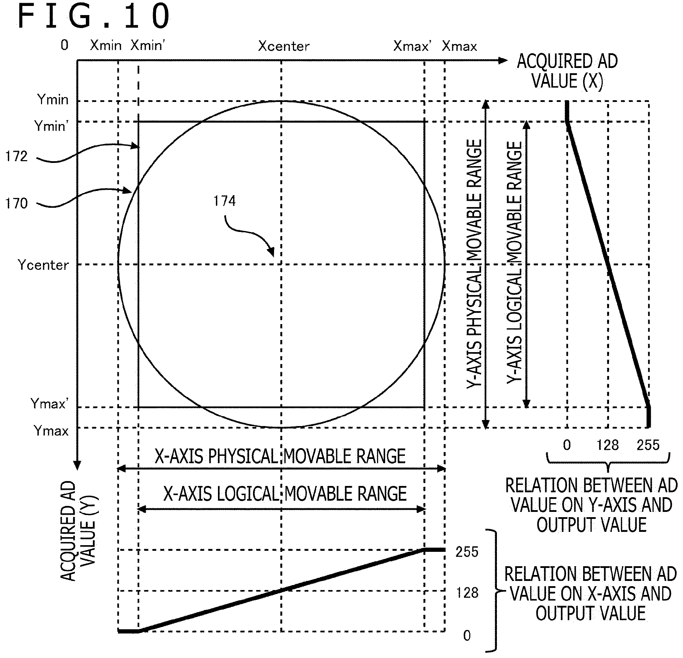

FIG. 10 is a diagram illustrating a relation between an operation and an output value of an analog stick.
[FIG. 11]

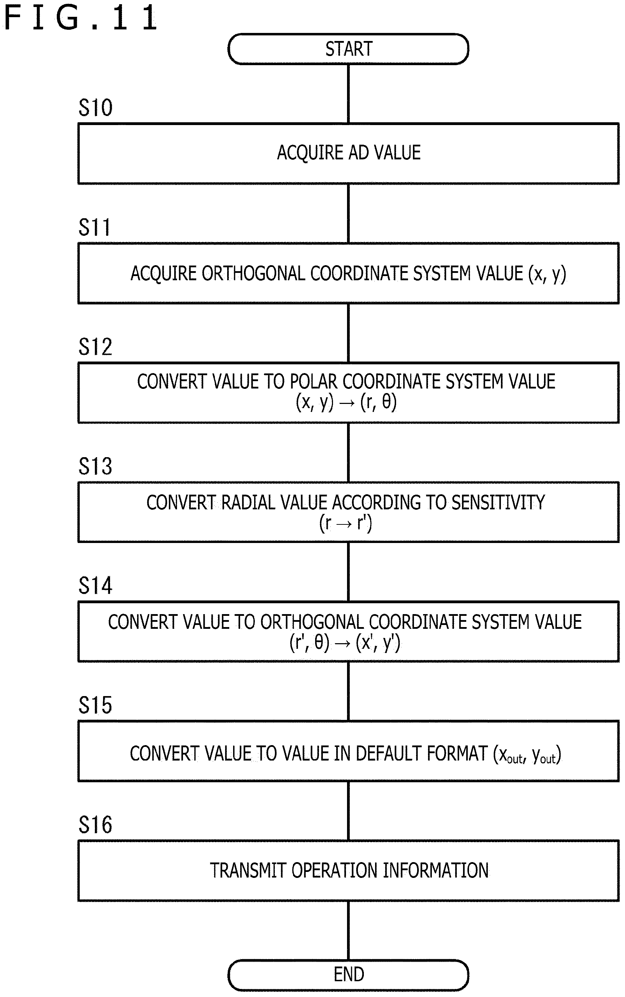

FIG. 11 is a flowchart illustrating an operation of the controller.
[FIG. 12]

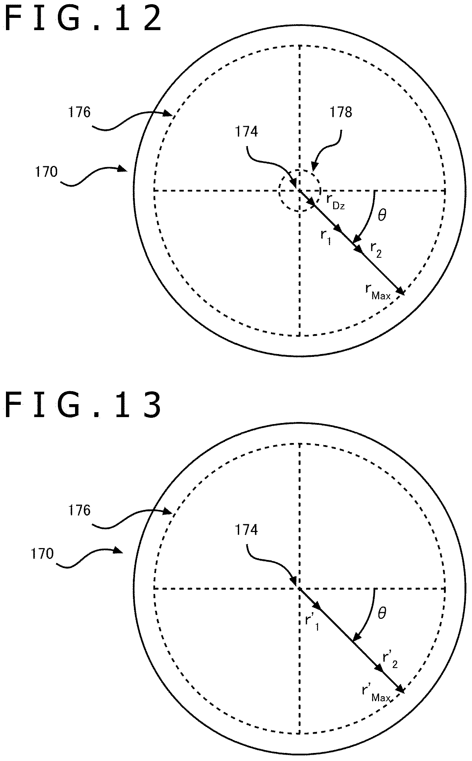

FIG. 12 is a diagram illustrating an example of a value in a polar coordinate system before sensitivity application.
[FIG. 13]
FIG. 13 is a diagram illustrating an example of a value in the polar coordinate system after sensitivity application.
[FIG. 14]

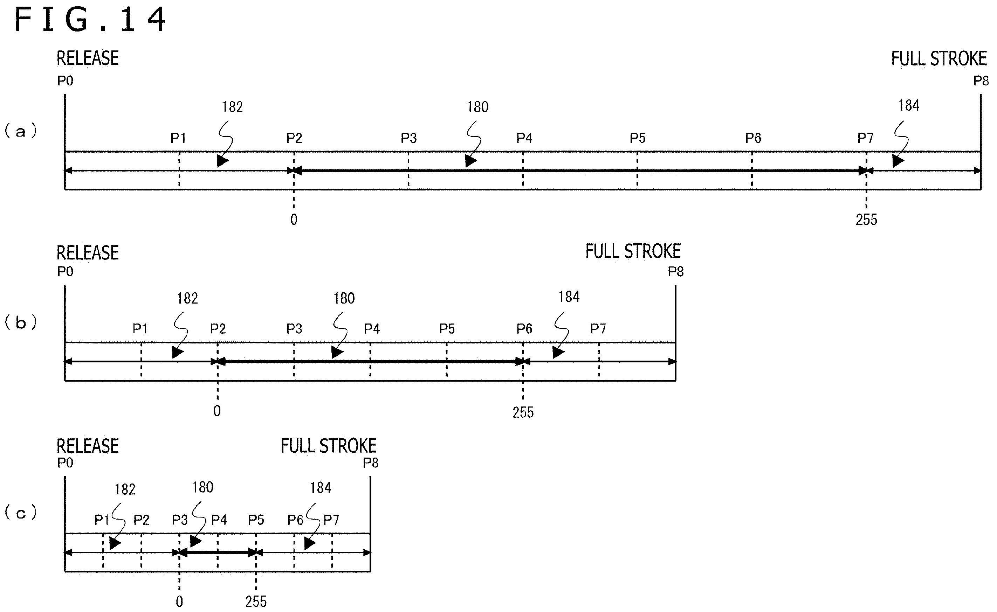

FIG. 14(a), FIG. 14(b), and FIG. 14(c) each illustrate a relation between the setting of a trigger stopper and a normalization range.
[FIG. 15]

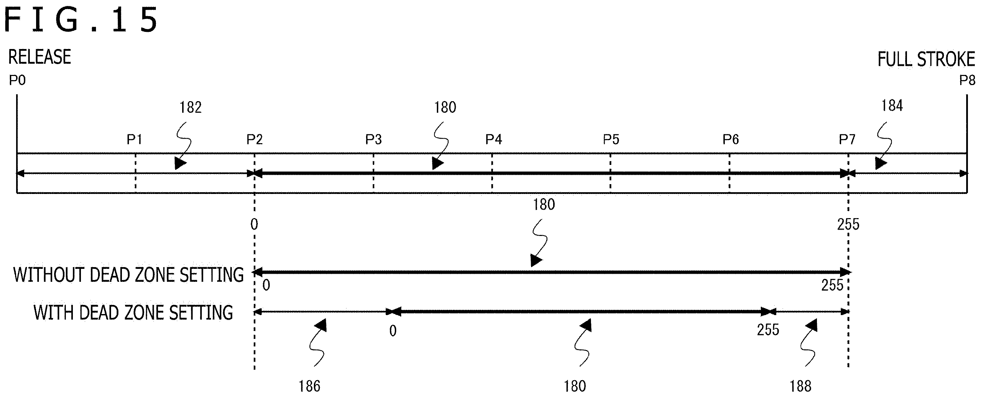

FIG. 15 is a diagram illustrating a relation between the setting of the trigger stopper and a dead zone.
[FIG. 16]

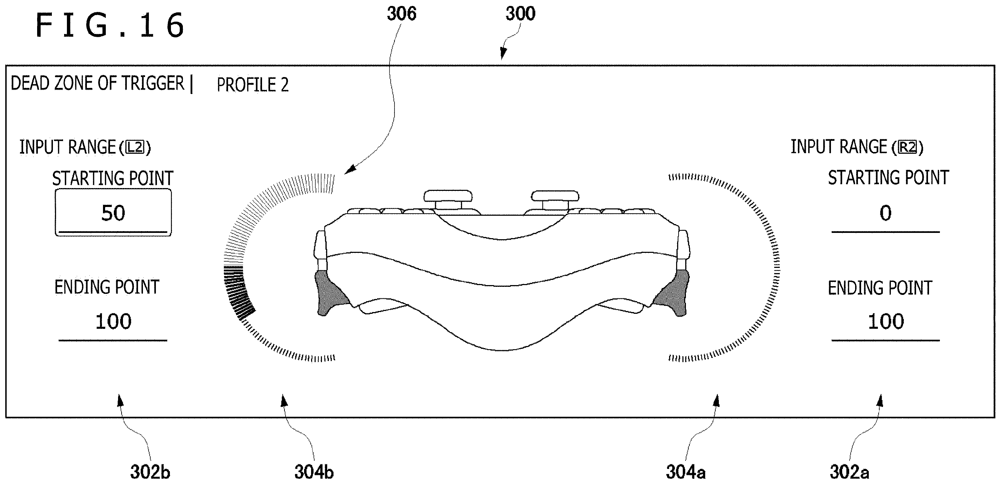

FIG. 16 is a diagram illustrating an example of a trigger setting screen.
[FIG. 17]

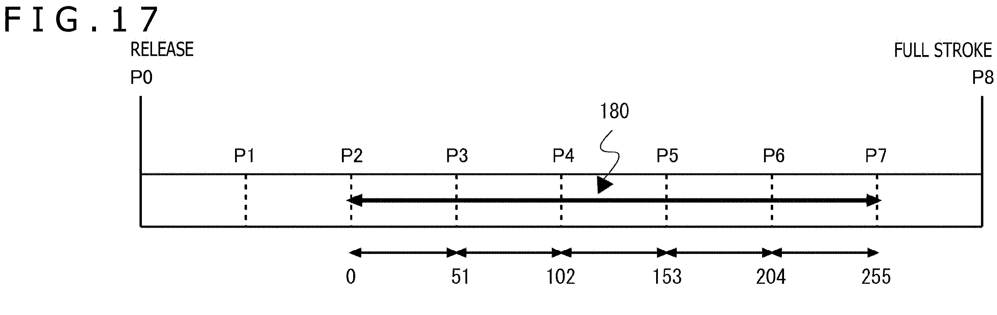

FIG. 17 is a diagram illustrating relations between correction points and output values of the controller.
[FIG. 18]

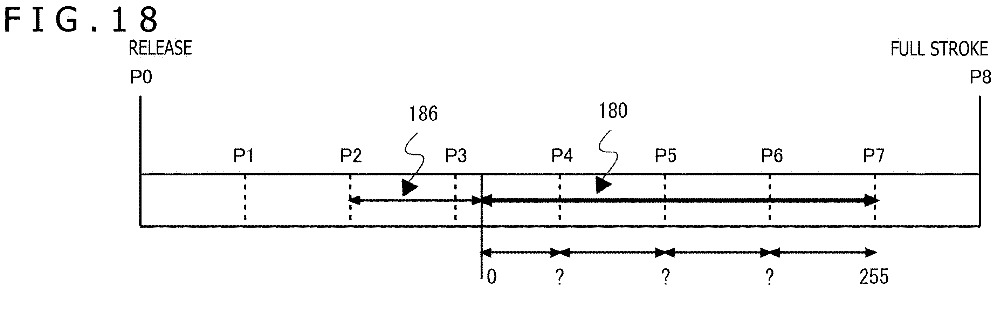

FIG. 18 is a diagram illustrating relations between the correction points and output values of the controller.
[FIG. 19]

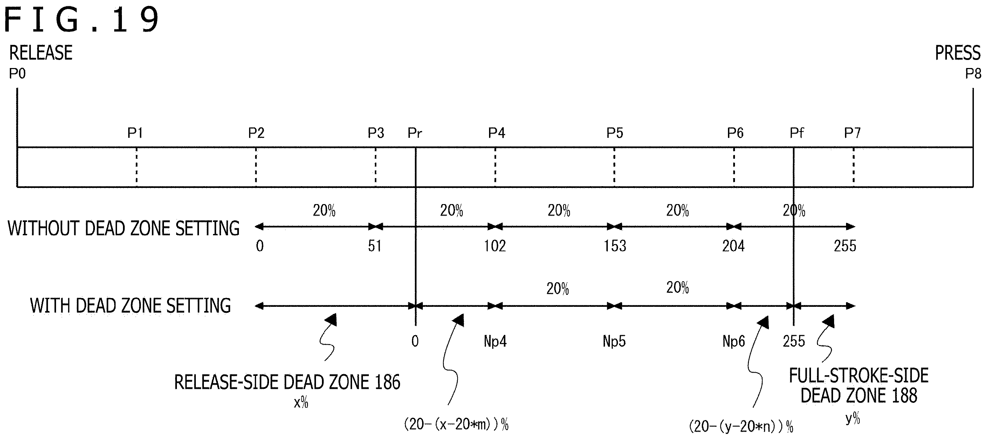

FIG. 19 is a diagram illustrating an example of allocating new output values to the correction points.
[FIG. 20]

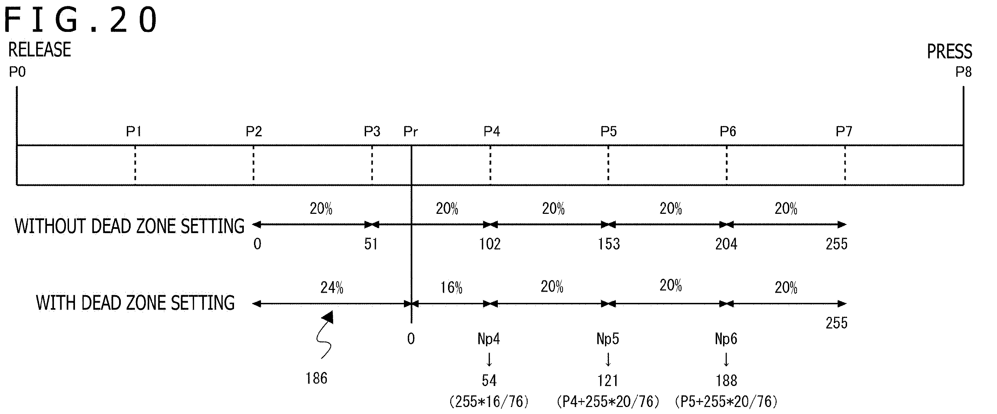

FIG. 20 is a diagram illustrating an example of allocating new output values to the correction points.

[Description of Embodiment]

FIG. 1 illustrates an information processing system 1 according to an embodiment. The information processing system 1 includes an information processing apparatus 10, a display apparatus 4, and a controller 6. The information processing apparatus 10 of the embodiment is a stationary game console. As a modification, the information processing apparatus 10 may be a computer, a tablet terminal, or a smartphone capable of executing applications such as games.

The controller 6 is an operation apparatus configured to receive operations input by a user regarding information processing (for example, video games) that the information processing apparatus 10 executes. The controller 6 sequentially transmits operation information indicating operations input by the user, to the information processing apparatus 10. The controller 6 can also be called a game controller. The information processing apparatus 10 is connected to the controller 6 with a cable or wirelessly. The information processing apparatus 10 of the embodiment is assumed to be equipment installed in a user's home or the like, but as a modification, the functions of the information processing apparatus 10 in the embodiment may be implemented on a server installed on a cloud and configured to provide cloud services (such as cloud games) via the Internet or the like. The controller 6 may communicate with the server via a terminal or communication equipment installed in the user's home or the like.

In the information processing system 1, the information processing apparatus 10 may transmit output reports which correspond to control data to the controller 6 at predetermined intervals. The controller 6 may transmit input reports which correspond to notification data to the information processing apparatus 10 on the basis of the reception of the output reports.

The display apparatus 4 may be a television including a display configured to output images and speakers configured to output audio, or may be a computer display. The display apparatus 4 may be connected to the information processing apparatus 10 with a wired cable or wirelessly. When receiving operation information provided from the controller 6, the information processing apparatus 10 reflects the operation information in the processing of system software or application software and causes the display apparatus 4 to display images related to the processing results.

The overview of the information processing system 1 of the embodiment is described.

The controller 6 of the embodiment stores user-customized setting information associated with operations on the controller 6 (hereinafter also referred to as "profile information" or simply a "profile") in non-volatile memory. The profile information includes setting information associated with the behavior of the controller 6. The controller 6 can store a plurality of pieces of profile information and can switch profile information to be applied, in response to operations performed by the user.

The profile information may include, for example, predetermined setting values regarding operations on the controller 6. Further, the profile information may include setting information associated with generating, on the basis of input operations on the controller 6, operation information to be input to the information processing apparatus 10. Moreover, the profile information may include information to be referenced when analog values detected in response to input of operations to the controller 6 are converted to digital values. In addition, the profile information may include setting information associated with the intensity of feedback (for example, vibration, light emission, audio, or the like) in the controller 6.

Further, the profile information may include setting information associated with changing, on the basis of operations input to the controller 6, a mode of image generation performed by the information processing apparatus 10 or a mode of image display performed by the display apparatus 4. Moreover, the profile information may include setting information associated with changing an audio output mode from the information processing apparatus 10, headphones (not illustrated), or the like on the basis of operations input to the controller 6. In addition, the profile information may include setting information associated with changing a chat mode on the basis of operations input to the controller 6.

Further, the profile information may include setting information associated with a microphone. The setting information associated with the microphone may include, for example, on/off information regarding the noise cancellation function of the microphone, on/off information regarding the microphone mute function, setting information regarding the volume of the microphone, and the like.

The profile information of the embodiment includes profile IDs (identifiers) and names, button allocation information, analog input device sensitivity-related information, and corresponding button information. The button allocation information is information indicating various actions, commands, and functions that the user has allocated to the respective buttons of the controller 6. In other words, the button allocation information is information indicating the allocation status of various actions, commands, and functions for the respective buttons. The corresponding button information is identification information regarding the buttons of the controller 6 with which the profile information is associated, and is information indicating, for example, a circle button 72 or a cross button 73 described later.

The analog input device sensitivity-related information includes information indicating setting values related to the sensitivity of analog input devices. The sensitivity of the analog input device defines the magnitude of operations recognized by the information processing apparatus 10 relative to the magnitude of operations actually input by the user to the analog input device (for example, tilt amounts or rotation amounts). The magnitude of operations recognized by the information processing apparatus 10 can also be called the magnitude of operations input to data processing (in other words, an application being executed) in the information processing apparatus 10. The setting value for sensitivity may be the ratio between the operation amount actually input to the analog input device and the operation amount recognized by the information processing apparatus 10.

Further, the analog input device sensitivity-related information includes dead zone information regarding the analog input device and includes, for example, setting values related to dead zones. The dead zone, which can also be called an insensitive zone, is a range in which operations input to the analog input device are not received. In other words, the dead zone is a range in which operations input to the analog input device are ignored. The setting value for the dead zone may be a value range of a tilt amount or a rotation amount corresponding to the dead zone. In such a manner, the profile information of the embodiment includes setting information regarding the analog input devices of the controller 6. As described later, the controller 6 of the embodiment includes analog sticks and trigger buttons as analog input devices.

The inventors of the present invention have recognized, as a first problem, that there is a demand for reducing the computation load for reflecting, in output values of the controller 6 based on operations performed by the user on the analog input device, the sensitivity set for the analog input device.

As a first feature of the information processing system 1 for solving the above-mentioned first problem, the controller 6 acquires a value in an orthogonal coordinate system based on the operation amount of the analog input device, and once converts that value into a value in another coordinate system that is advantageous in terms of computational load. The other coordinate system is a polar coordinate system in the embodiment, but it is sufficient if the other coordinate system is advantageous over the orthogonal coordinate system in terms of computational load, and the other coordinate system is not limited to a polar coordinate system. The controller 6 adjusts the value in the other coordinate system obtained after the conversion, on the basis of the sensitivity of the analog input device, and sets the value in the other coordinate system obtained after the adjustment back to a value in the orthogonal coordinate system, which is the format of the output value.

Further, the inventors of the present invention have recognized, as a second problem, that, in a case where the user can set any range of dead zone for the analog input device, it may not be possible to maintain the linearity of output values corresponding to user operations on the analog input device by utilizing correction points set at the time of manufacturing the controller 6.

As a second feature of the information processing system 1 for solving the above-mentioned second problem, the controller 6 allocates, in a case where a dead zone is set for the analog input device, new output values to each correction point outside a dead zone range such that the minimum value to the maximum value of the output value correspond to a movable range of the analog input device excluding the dead zone. The controller 6 generates output values corresponding to operations performed by the user on the analog input device, by using the new output values allocated to each correction point.

The button configuration of the controller 6 is described. FIG. 2 illustrates the upper surface of the controller 6. The user operates the controller 6 by gripping a left-side grip unit 78b with the left hand and a right-side grip unit 78a with the right hand. On the upper surface of a housing of the controller 6, directional buttons 71, a right analog stick 77a, a left analog stick 77b, and operation buttons 76, which are input units, are provided. The directional buttons 71 are configured to support input in eight directions including up, down, left, right, and diagonals, and in the present embodiment, include an up button 71a, a left button 71b, a down button 71c, and a right button 71d. The four types of operation buttons 76 are marked with different shapes with different colors to distinguish them from each other. The operation buttons 76 include the circle button 72, the cross button 73, a square button 74, and a triangle button 75.

The right analog stick 77a and the left analog stick 77b, which are also referred to as control sticks, thumb sticks, or joysticks, are used for inputting directions and tilt amounts by being tilted. The tilt amount can also be called the angle at which the right analog stick 77a or the left analog stick 77b has been tilted. The right analog stick 77a and the left analog stick 77b also function as push-down-type buttons configured to sink downward when pressed by the user and return to the original positions when the user releases the hand. In the following, in a case where the right analog stick 77a and the left analog stick 77b are collectively referred to, they are also referred to as an "analog stick 77." The operation buttons 76, the directional buttons 71, and the analog stick 77 are used for operating applications (for example, games) to be executed on the information processing apparatus 10.

A touchpad 79 is provided in the flat region between the directional buttons 71 and the operation buttons 76 on the upper surface of the housing. The touchpad 79 functions not only for detecting touch by the finger of the user but also as a push-down-type button configured to sink downward when pressed by the user and return to the original position when the user releases the hand. Moreover, a speaker 89 and a microphone 91 are further provided on the upper surface of the housing.

A home button 80 is provided between the right analog stick 77a and the left analog stick 77b. The home button 80 is used for turning on the power of the controller 6 and the information processing apparatus 10, and for simultaneously activating the communication function for establishing a wireless connection with the information processing apparatus 10. After the controller 6 is connected to the information processing apparatus 10, the home button 80 is also used for causing the information processing apparatus 10 to display a menu screen or a home screen. The menu screen or the home screen is a screen for the user to select functions or applications to be executed by the information processing apparatus 10.

A CREATE button 81 is provided on the left side of the touchpad 79. An OPTIONS button 82 is provided on the right side of the touchpad 79. The CREATE button 81 and the OPTIONS button 82 are used for inputting user instructions to the OS (operating system) or the system software on the information processing apparatus 10. In other words, the CREATE button 81 and the OPTIONS button 82 are buttons used for calling (operating) the functions of the OS or the system software on the information processing apparatus 10. The CREATE button 81 and the OPTIONS button 82 may both be formed as push-type buttons.

A light-emitting unit 86 is provided at the lower edge of the touchpad 79. The light-emitting unit 86 may include LEDs (light emitting diodes). The light-emitting unit 86 includes a plurality of lamps (five lamps in the example of FIG. 2) and displays information associated with the controller number identifying the controller and information associated with the state of the controller 6 by a lighting mode (that is, the combination of the on state and the off state) of the plurality of lamps. The light-emitting unit 86 is controlled to a lighting mode specified by an application being executed on the information processing apparatus 10. Further, in a case where profile information to be applied to operations on the controller 6 is switched, the light-emitting unit 86 is controlled to a predetermined lighting mode indicating that the profile information regarding the controller 6 has been switched for a short period of time.

Vertically long light-emitting units 85 are provided to the left side and right side of the touchpad 79. The light-emitting units 85 include red (R), green (G), and blue (B) LEDs and light up according to light emission color information transmitted from the information processing apparatus 10.

A right function button 88a and a left function button 88b (hereinafter also referred to as a function button 88 when collectively referred to) are buttons for changing or expanding the functions of other buttons. In the embodiment, when an operation on the operation button 76 is input while an operation on the function button 88 is being input, profile information to be applied to operations on the controller 6 is switched to profile information associated with the type of the operation button 76 operated together with the function button 88. The right function button 88a and the left function button 88b may be functionally identical. In that case, the right function button 88a and the left function button 88b provide the same function regardless of which button on the left or the right is operated.

FIG. 3 illustrates the rear-side side surface of the controller 6. On the upper side of the rear-side side surface of the housing of the controller 6, the touchpad 79 folding from the upper surface of the housing extends. On the rear-side side surface of the housing, an R1 button 83a, an R2 button 84a, an L1 button 83b, an L2 button 84b, a right trigger stopper 87a, and a left trigger stopper 87b are provided at symmetrical positions in the longitudinal direction. The R1 button 83a and the R2 button 84a are operated by the right index finger and middle finger of the user, respectively, and the L1 button 83b and the L2 button 84b are operated by the left index finger and middle finger of the user, respectively.

The R1 button 83a and the L1 button 83b on the upper side are configured as push-type buttons, while the R2 button 84a and the L2 button 84b on the lower side are configured as trigger-type buttons supported rotatably. The R2 button 84a and the L2 button 84b support analog output similarly to the right analog stick 77a and the left analog stick 77b and output values corresponding to the amount of rotation. In a case where the R2 button 84a and the L2 button 84b are collectively referred to, they are referred to as a trigger button 84.

The right trigger stopper 87a is a member configured to adjust or limit a rotation range of the R2 button 84a. The left trigger stopper 87b is a member configured to adjust or limit a rotation range of the L2 button 84b. In a case where the right trigger stopper 87a and the left trigger stopper 87b are collectively referred to, they are referred to as a trigger stopper 87. The trigger stopper 87 can also be called a limitation unit configured to limit the movable range (also called a tiltable range or a rotatable range) of the analog input device. The right trigger stopper 87a and the left trigger stopper 87b can each be set to any of a first stage, a second stage, and a third stage. In the first stage, the maximum rotation angle is 26 degrees, in the second stage, the maximum rotation angle is 14 degrees, and in the third stage, the maximum rotation angle is 10 degrees.

As illustrated in FIG. 2 and FIG. 3, the controller 6 includes various input units (such as various buttons and sticks). The user inputs operations to the input units of the controller 6 while looking at a menu screen or a game screen displayed on the display apparatus 4.

FIG. 4 illustrates a hardware configuration of the controller 6 according to the present embodiment. The controller 6 includes, in addition to the hardware described in relation to FIG. 2 and FIG. 3, a vibrator 90, a storage unit 92, a communication control unit 94, and a processor 96. The processor 96 executes various types of data processing and controls the operation of various types of hardware. The processor 96 may include a CPU (central processing unit), memory, and an SoC (system on a chip).

The vibrator 90 provides tactile stimulation to the user by vibrating on the basis of control signals from the processor 96. The vibrator 90 may include a VCM (voice coil motor). The vibrator 90 and the light-emitting unit 86 operate as notification apparatuses configured to notify the user of various types of information. The vibrator 90 provides notifications through tactile information, and the light-emitting unit 86 provides notifications through visual information.

The storage unit 92 stores data to be referenced or updated by the processor 96. The communication control unit 94 controls communication with external apparatuses. In the embodiment, the communication control unit 94 performs wireless communication with the information processing apparatus 10, but as a modification, the communication control unit 94 may perform wired communication with the information processing apparatus 10.

FIG. 5 illustrates a hardware configuration of the information processing apparatus 10 according to the present embodiment. The information processing apparatus 10 includes a main power button 20, a power ON LED 21, a standby LED 22, a system controller 24, a clock 26, a device controller 30, a media drive 32, a USB (universal serial bus) module 34, a flash memory 36, a wireless communication module 38, a wired communication module 40, a sub system 50, and a main system 60.

The main system 60 includes a main CPU, a memory, which is a main storage apparatus, a memory controller, a GPU (graphics processing unit), and the like. The GPU is used principally for arithmetic processing of game programs. These functions may be configured as an SoC and formed on a single chip. The main CPU has the functions of starting up the OS and executing applications installed in a storage unit (for example, the flash memory 36 or an auxiliary storage apparatus, which is not illustrated), under an environment provided by the OS. Further, the main system 60 has the function of controlling display contents on the display apparatus 4.

The sub system 50 includes a sub CPU, a memory, which is a main storage apparatus, a memory controller, and the like but does not include a GPU. The number of circuit gates of the sub CPU is smaller than the number of circuit gates of the main CPU, and the operating power consumption of the sub CPU is lower than the operating power consumption of the main CPU. The sub CPU operates while the main CPU is in a standby state, and the processing functions thereof are limited to achieve low power consumption. Note that the sub CPU and the memory may be formed on separate chips.

The main power button 20 is an input unit to which operation input from the user is performed, and is provided on the front surface of the housing of the information processing apparatus 10. The main power button 20 is operated to turn on or off the power supply to the main system 60 of the information processing apparatus 10. In the following, the main power being in the on state means that the main system 60 is in an active state, and the main power being in the off state means that the main system 60 is in a standby state. The power ON LED 21 lights up when the main power button 20 is turned on, and the standby LED 22 lights up when the main power button 20 is turned off.

The system controller 24 detects the pressing performed by the user on the main power button 20. When the main power button 20 is pressed while the main power is in the off state, the system controller 24 acquires the pressing operation as an "on instruction." On the other hand, when the main power button 20 is pressed while the main power is in the on state, the system controller 24 acquires the pressing operation as an "off instruction." The system controller 24 may acquire power on/off instructions similar to the ones described above from operation input from the controller 6.

While the main CPU has the function of executing game programs installed in a predetermined storage unit or a ROM medium 44, the sub CPU does not have such a function. However, the sub CPU has the function of accessing the storage unit and the function of transmitting and receiving data to and from external apparatuses. The sub CPU only has such limited processing functions and accordingly can operate with a lower power consumption than that of the main CPU. These functions of the sub CPU are executed when the main CPU is in the standby state.

The clock 26 is a real-time clock. The clock 26 generates information regarding the current date and time and supplies the information to the system controller 24, the sub system 50, and the main system 60.

The device controller 30 is configured as an LSI (large-scale integrated circuit) configured to execute information exchange between devices, similarly to a southbridge. As illustrated in FIG. 5, the device controller 30 is connected to such devices as the system controller 24, the media drive 32, the USB module 34, the flash memory 36, the wireless communication module 38, the wired communication module 40, the sub system 50, and the main system 60. The device controller 30 absorbs a difference in electric characteristics and a difference in data transfer rate between the devices and controls the timing of data transfer.

The media drive 32 is a drive apparatus configured to drive the ROM medium 44, which has recorded thereon application software such as games and license information, mounted thereon to read out programs, data, and the like from the ROM medium 44. The ROM medium 44 is a read-only recording medium such as an optical disc, a magneto-optical disk, or a Blu-ray disk.

The USB module 34 is a module to be connected to external equipment by a USB cable. The flash memory 36 is an auxiliary storage apparatus that forms an internal storage. The wireless communication module 38 wirelessly communicates with, for example, the controller 6 by using a communication protocol such as a Bluetooth (trademark or registered trademark) protocol or an IEEE (Institute of Electrical and Electronics Engineers) 802.11 protocol. The wired communication module 40 communicates via a wired connection with external equipment and is connected to the Internet, servers, or the like via access points, which are not illustrated, for example.

FIG. 6 is a block diagram illustrating functional blocks of the controller 6. Each block illustrated in the block diagrams herein can be achieved by elements, electronic circuits, or mechanical apparatuses such as computer processors, CPUs, or memory in terms of hardware, and by computer programs or the like loaded into the memory in terms of software. Here, however, functional blocks achieved by their cooperation are illustrated. Thus, it is to be understood by those skilled in the art that these functional blocks can be achieved in various forms by combinations of hardware and software.

The controller 6 includes a storage unit 100 and a processing unit 110. The storage unit 100 corresponds to the storage unit 92 of FIG. 4 and stores data to be referenced or updated by the processing unit 110. The storage unit 100 includes a profile storage unit 102 and a correction point information storage unit 104.

The profile storage unit 102 includes a non-volatile memory configured to store a plurality of pieces of profile information. The profile storage unit 102 stores each of the plurality of pieces of profile information in association with slots and the operation buttons 76 different from each other. In the embodiment, the profile storage unit 102 stores up to four pieces of profile information in association with four slots (slot 1 to slot 4) and the four operation buttons 76 (the circle button 72, the cross button 73, the square button 74, and the triangle button 75).

The correction point information storage unit 104 stores correction point information, which is information associated with a plurality of positions (hereinafter also referred to as "correction points") between the release state and full-stroke state of the trigger button 84. The release state is a state in which the finger is away from the trigger button 84 and no operation is input to the trigger button 84. The full-stroke state is a state in which the trigger button 84 has been rotated to the upper limit of a physical movable range.

The plurality of correction points can also be called a plurality of positions in a rotatable range of the trigger button 84. Further, the plurality of correction points are different from each other in the rotation amount of the trigger button 84 (also called the amount of a user operation on the trigger button 84). The correction point information is information measured at the time of manufacturing the controller 6 and includes pairs of characteristic values (for example, voltage values) and output values (values indicating the magnitude of operations) for each of the plurality of correction points.

The processing unit 110 includes an operation detection unit 112, an operation information generation unit 114, an operation information transmission unit 116, a profile update unit 118, and an allocation unit 120. A computer program (for example, firmware) having at least some of these plurality of functions implemented thereon may be stored in the storage unit 92 of the controller 6. The processor 96 of the controller 6 may exhibit at least some of these plurality of functions by reading this computer program into the main memory and executing it.

The operation detection unit 112 detects operations performed by the user and input to the controller 6. The operation performed by the user includes an operation for moving the analog input device, specifically, an operation for tilting the analog stick 77 and an operation for rotating the trigger button 84. The operation detection unit 112 analog-to-digital converts an output from the analog input device related to an operation performed by the user on the analog input device, at a predetermined sampling rate, and thereby acquires an output value. The operation detection unit 112 detects an analog value (for example, a voltage value) associated with an operation on the analog input device, analog-to-digital converts the analog value, and passes the digital value obtained after the conversion (hereinafter also referred to as an "AD value") to the operation information generation unit 114.

The operation information generation unit 114 generates, on the basis of an operation performed by the user on the controller 6 and detected by the operation detection unit 112 (for example, an AD value output from the operation detection unit 112), operation information associated with the operation performed by the user. In the embodiment, the operation information generation unit 114 particularly generates operation information associated with operations performed by the user on the analog stick 77 and the trigger button 84.

The operation information transmission unit 116 transmits operation information generated by the operation information generation unit 114 to the information processing apparatus 10. The operation information transmission unit 116 may transmit the operation information to the information processing apparatus 10 by including the operation information in an input report to be transmitted from the controller 6 to the information processing apparatus 10.

The profile update unit 118 updates profile information regarding the controller 6, which has been stored in the profile storage unit 102, in accordance with a profile update instruction transmitted from the information processing apparatus 10. The profile update instruction includes, for example, an instruction for updating setting values related to the sensitivity characteristics and dead zone of the analog stick 77. Further, the profile update instruction includes an instruction for updating setting values related to the dead zone of the trigger button 84.

The allocation unit 120 dynamically allocates output values indicating the magnitude of an operation to each of the plurality of correction points stored in the correction point information storage unit 104, on the basis of updated profile information.

FIG. 7 is a block diagram illustrating functional blocks of the information processing apparatus 10. The information processing apparatus 10 includes a storage unit 200 and a processing unit 210. The processing unit 210 executes various types of information processing. The processing unit 210 is achieved by the processor of the information processing apparatus 10 and may be achieved by, for example, the main system 60 illustrated in FIG. 5. The storage unit 200 stores data to be referenced or updated by the processing unit 210. The storage unit 200 may include the flash memory 36 and the ROM medium 44 illustrated in FIG. 5.

The storage unit 200 includes an application storage unit 202 and a profile storage unit 204. The application storage unit 202 stores data regarding applications (for example, game programs) that are executable on the information processing apparatus 10.

The profile storage unit 204 stores profile information which is regarding the controller 6 and of which the controller 6 has given a notification. The profile storage unit 204 stores, similarly to the profile storage unit 102 of the controller 6, up to four pieces of profile information in association with the four slots and the four operation buttons 76 (the circle button 72, the cross button 73, the square button 74, and the triangle button 75). Further, the profile storage unit 204 stores information which is associated with the currently applied profile in the controller 6 and of which the controller 6 has given a notification. Specifically, the profile storage unit 204 stores which profile corresponding to any of the slots 1 to 4 corresponds to the applied profile.

The processing unit 210 includes a profile information acquisition unit 212, an operation information reception unit 214, an application execution unit 216, a setting screen generation unit 218, a display control unit 220, and a profile update instruction unit 222. A computer program having at least some of these plurality of functions implemented thereon may be stored in the storage unit 200 of the information processing apparatus 10. The processor (for example, the main system 60) of the information processing apparatus 10 may exhibit at least some of these plurality of functions by reading this computer program into the main memory and executing it.

The profile information acquisition unit 212 acquires, from the controller 6 connected to the information processing apparatus 10, information associated with a plurality of user-selectable profiles stored in the controller 6. The profile information acquisition unit 212 stores the information associated with the plurality of user-selectable profiles in the profile storage unit 204.

The operation information reception unit 214 receives information regarding operations performed by the user on the controller 6, the information having been transmitted from the controller 6 connected to the information processing apparatus 10.

The application execution unit 216 executes an application (for example, a game program or system software) stored in the application storage unit 202. For example, the application execution unit 216 advances the game according to information regarding operations performed by the user on the controller 6 and sequentially generates images indicating the game progress results (hereinafter also referred to as "game screens").

The setting screen generation unit 218 generates, during the execution of an application (for example, during the display of the game screen), data regarding a profile setting screen for the controller 6 on the basis of information regarding operations performed by the user on the controller 6. The profile setting screen of the embodiment includes setting screens for the analog input device, specifically, a setting screen for the analog stick 77 and a setting screen for the trigger button 84.

The display control unit 220 controls the display of information and images on the display apparatus 4. For example, the display control unit 220 outputs data regarding a game screen generated by the application execution unit 216 to the display apparatus 4 and causes the display apparatus 4 to display the game screen. Further, the display control unit 224 outputs data regarding a setting screen generated by the setting screen generation unit 218 to the display apparatus 4 and causes the display apparatus 4 to display the setting screen.

The profile update instruction unit 222 transmits, to the controller 6, a profile update instruction based on contents input by the user on a profile setting screen. The profile update instruction unit 222 may transmit the profile update instruction to the information processing apparatus 10 by including the profile update instruction in an output report to be transmitted from the information processing apparatus 10 to the controller 6 at predetermined intervals.

The operation of the information processing system 1 with the above configuration is described.

First, as an operation related to the first feature of the information processing system 1, mainly, the adjustment and operation of the analog stick 77 (the right analog stick 77a and the left analog stick 77b) are described.

The setting screen generation unit 218 of the information processing apparatus 10 generates an analog stick setting screen in response to operations performed by the user and input to the controller 6. The display control unit 220 of the information processing apparatus 10 causes the display apparatus 4 to display the analog stick setting screen.

FIG. 8 illustrates an example of an analog stick setting screen 130. The analog stick setting screen 130 of FIG. 8 indicates content for setting the sensitivity and dead zone of the analog stick 77 of the controller 6. The analog stick setting screen 130 includes a setting target selection field 132, a sensitivity pattern selection field 134, a sensitivity curve adjustment gauge 136, a dead zone adjustment gauge 138, a sensitivity curve image 140, and a setting status image 148.

The setting target selection field 132 is a screen element for selecting the type of the analog stick 77 (in the embodiment, the right analog stick 77a or the left analog stick 77b) to be set on the analog stick setting screen 130. In FIG. 11, the left analog stick 77b is selected.

The sensitivity pattern selection field 134 is a screen element for selecting a specific pattern from among a plurality of predetermined sensitivity curve patterns. The sensitivity curve is a curved line (including straight lines) indicating a relation between the tilt angle and output value of the analog stick 77. Specifically, the sensitivity curve is a curved line that correlates the magnitude of an operation input by the user to the analog stick 77 (hereinafter also referred to as a "user input operation amount") with the magnitude of an operation recognized in the data processing of the information processing apparatus 10 (hereinafter also referred to as a "system recognition operation amount"). The user input operation amount can also be called the actual tilt amount or tilt angle of the analog stick 77. Further, the system recognition operation amount can also be called the tilt amount or tilt angle of the analog stick 77 input to the data processing of the information processing apparatus 10 (the application execution unit 216 in the embodiment).

The plurality of sensitivity curve patterns may include linear, delay, and quick patterns. The linear pattern is a pattern in which the system recognition operation amount increases in proportion to the increase in user input operation amount, and is a default pattern in which, for example, the slope of the sensitivity curve is constant. The delay pattern is a pattern in which the amount of increase in system recognition operation amount is gradual while the user input operation amount is small and in which the system recognition operation amount increases significantly as the user input operation amount becomes large. The quick pattern is a pattern in which the amount of increase in system recognition operation amount is large even when the user input operation amount is small and in which the system recognition operation amount reaches the upper limit early.

The sensitivity curve adjustment gauge 136 is a screen element for adjusting the correspondence relation between the user input operation amount and the system recognition operation amount for the analog stick 77. Specifically, the sensitivity curve adjustment gauge 136 is a screen element for adjusting the slope or curvature of the sensitivity curve. The sensitivity curve adjustment gauge 136 includes a slider suggesting the value of the sensitivity of the analog stick 77. The dead zone adjustment gauge 138 is a screen element for adjusting a range of the dead zone (in other words, the size of the dead zone) of the analog stick 77. The dead zone adjustment gauge 138 includes a slider suggesting the value of the dead zone of the analog stick 77.

The analog stick setting screen 130 includes two images indicating both the sensitivity and dead zone of the analog stick 77 on a common scale (in other words, a common standard). One image is the sensitivity curve image 140 indicating the sensitivity and the dead zone along an axis related to the magnitude of operations input by the user to the analog stick 77. The other image is the setting status image 148 indicating the sensitivity and the dead zone by the distance from the center based on the magnitude of operations input by the user to the analog stick 77. The setting screen generation unit 218 places the sensitivity curve image 140 and the setting status image 148 on the analog stick setting screen 130.

The sensitivity curve image 140 includes objects indicating sensitivity curves (an initial sensitivity curve 146 and an adjusted sensitivity curve 144), which are placed in a graph region with the magnitude of operations input by the user to the analog stick 77 on the horizontal axis and the magnitude of operations recognized by the information processing apparatus 10 on the vertical axis. The sensitivity curve can also be called a graph indicating a relation between the input value (horizontal axis value) obtained before sensitivity reflection adjustment and the output value (vertical axis value) which reflects sensitivity and which is obtained after the adjustment.

The initial sensitivity curve 146 indicates the initial value of a sensitivity curve defined by a pattern selected in the sensitivity pattern selection field 134. The adjusted sensitivity curve 144 indicates a sensitivity curve obtained after adjustment in the sensitivity curve adjustment gauge 136. Further, the sensitivity curve image 140 includes an object indicating the range of a dead zone (a dead zone 142), which is placed along the horizontal axis of the graph region. The dead zone 142 of FIG. 6 indicates that 18% of the tilt amount that the user can input from the stationary position (in other words, the initial position) of the analog stick 77 is the dead zone.

The setting status image 148 includes an image indicating an input unit to be set (the left analog stick 77b in FIG. 8), and information associated with the sensitivity and the dead zone is superimposed on the image. Specifically, the setting status image 148 includes a plurality of concentric circles indicating, with the stationary position (in other words, the initial position) of the analog stick 77 as the center, the magnitude of operations from the stationary position in a plurality of stages (level lines 150). The plurality of level lines 150 may include the three level lines 150 indicating, using the maximum value of the magnitude of operations as a reference, 100%, 75%, and 50% of the maximum value. The level lines 150 can also be called contour lines related to the magnitude of operations.

A dead zone 152 that is a first object indicating an insensitive zone is placed on the setting status image 148. The dead zone 152 indicates the range of the dead zone by the distance from the stationary position of the analog stick 77, that is, the center of the circles indicated by the level lines 150. An adjusted operation amount indicator 154 and an unadjusted operation amount indicator 156 are further placed on the setting status image 148. The adjusted operation amount indicator 154 and the unadjusted operation amount indicator 156 both indicate the magnitude of operations on the analog stick 77 by the distance from the above-mentioned center. Further, the adjusted operation amount indicator 154 and the unadjusted operation amount indicator 156 both indicate the tilt direction of the analog stick 77 by the direction in which the line extends from the above-mentioned center.

The adjusted operation amount indicator 154 indicates a value obtained by adjusting a value related to an operation performed by the user and input to the analog stick 77, with use of profile information being adjusted in an adjustment mode (for example, a left analog stick adjustment mode). That is, the adjusted operation amount indicator 154 indicates the operation amount of the analog stick 77 recognized by the information processing apparatus 10 in a case where the profile information being adjusted is applied to the controller 6. The profile information being adjusted includes, for example, a setting value for sensitivity defined by a sensitivity curve adjusted by the sensitivity curve adjustment gauge 136 and the dead zone adjustment gauge 138.

The unadjusted operation amount indicator 156 indicates a value which is related to an operation performed by the user and input to the analog stick 77 and to which profile information being adjusted in the adjustment mode is not applied. Specifically, the unadjusted operation amount indicator 156 indicates a value derived using the amount of the operation performed by the user and input to the analog stick 77 and a linear sensitivity curve, regardless of the profile information being adjusted in the adjustment mode. The value indicated by the unadjusted operation amount indicator 156 is the default value of the operation amount of the analog stick 77 that the information processing apparatus 10 recognizes on the basis of the amount of an operation performed by the user and input to the analog stick 77. Note that, although the term "unadjusted" is used, the adjustment of the analog stick 77 at the time of manufacturing or shipping the controller 6 in the factory is completed.

The setting status image 148 is an image representing the sensitivity of the analog stick 77 based on a sensitivity curve set by the user on the analog stick setting screen 130. Specifically, the setting status image 148 is an image representing a relation between an adjusted value using profile information being adjusted, which is indicated by the adjusted operation amount indicator 154, and a value to which the profile information being adjusted is not applied, which is indicated by the unadjusted operation amount indicator 156.

On the analog stick setting screen 130, the user selects a desired pattern from among the plurality of predetermined sensitivity curve patterns in the sensitivity pattern selection field 134. Here, it is assumed that the delay pattern has been selected. The setting screen generation unit 218 places, on the sensitivity curve image 140, the initial sensitivity curve 146 determined by the delay pattern. Further, the setting screen generation unit 218 places, on the sensitivity curve image 140, the adjusted sensitivity curve 144 reflecting the setting values for the sensitivity curve adjustment gauge 136 and the dead zone adjustment gauge 138. Moreover, the user adjusts and updates the sensitivity curve (including the dead zone) of the analog stick 77 while checking the setting status image 148 on the analog stick setting screen 130.

The profile update instruction unit 222 of the information processing apparatus 10 transmits, to the controller 6, a profile update instruction including information regarding the vertices of a line graph representing the sensitivity characteristics of the analog stick 77 specified on the analog stick setting screen 130 (for example, the adjusted sensitivity curve 144 of FIG. 8). The profile update unit 118 of the controller 6 stores, in the profile storage unit 102, the information regarding the vertices of the line graph representing the sensitivity characteristics of the analog stick 77.

FIG. 9 illustrates an example of a sensitivity curve. In the example of FIG. 9, sensitivity information regarding the analog stick 77, which includes information regarding a vertex 1, a vertex 2, a vertex 3, and a vertex 4 of the adjusted sensitivity curve 144, is stored in the profile storage unit 102. Examples of information regarding each vertex of the adjusted sensitivity curve 144 are described.

Information regarding the vertex 1: $(r_{Dz}, 0)$
Information regarding the vertex 2: $(r_1, r'_1)$
Information regarding the vertex 3: $(r_2, r'_2)$
Information regarding the vertex 4: $(r_{Max}, r'_{Max})$
$r_{Dz}$ is a value indicating the range of the dead zone, that is, the range of $0 \le$ input value $\le r_{Dz}$ is the dead zone. The information regarding the vertex 4 may be a fixed value.

FIG. 10 illustrates a relation between an operation and an output value of the analog stick 77. A physical movable range 170 indicated by the solid circle indicates the range in which the analog stick 77 can actually move. A return position 174, which can also be called a center return position, is the position of the analog stick 77 when the finger is away from the analog stick 77 (that is, when the analog stick 77 is not operated). At the time of manufacturing the controller 6, the minimum values of the AD value ($X_{min}$ and $Y_{min}$) and the maximum values of the AD value ($X_{max}$ and $Y_{max}$) in the physical movable range 170 as well as AD values at the return position 174 ($X_{center}$ and $Y_{center}$) are measured.

Moreover, a predetermined proportion (4% in the embodiment) of the distance from the return position 174 to the AD maximum values ($X_{max}$ and $Y_{max}$) based on the physical movable range 170 is set as an offset value, and positions inside the AD maximum value by the offset value ($X'_{max}$ and $Y'_{max}$) are set as the maximum values of the output value from the controller 6. Similarly, a predetermined proportion (4% in the embodiment) of the distance from the return position 174 to the AD minimum values ($X_{min}$ and $Y_{min}$) based on the physical movable range 170 is set as an offset value, and positions inside the AD minimum value by the offset value ($X'_{min}$ and $Y'_{min}$) are set as the minimum values of the output value from the controller 6.

The range defined by ($X'_{max}$ and $Y'_{max}$) and ($X'_{min}$ and $Y'_{min}$) is set as a logical movable range 172. The output value from the controller 6 is normalized in the range of 0 to 255. The normalized output value changes in the range of the logical movable range 172.

As illustrated in the graph at the bottom of FIG. 10, the output value in the X-axis direction is determined as follows according to the AD value on the X-axis in the physical movable range 170.

(1) In a case where the AD value is $X'_{min}$ or less, the output value is set to 0.
(2) In a case where the AD value is between $X'_{min}$ and $X_{center}$, the output value is determined by linear interpolation to set an output value ranging from 0 to 128.
(3) In a case where the AD value is between $X_{center}$ and $X'_{max}$, the output value is determined by linear interpolation to set an output value ranging from 128 to 255.
(4) In a case where the AD value is $X'_{max}$ or more, the output value is set to 255.

Similarly, as illustrated in the graph on the right of FIG. 10, the output value in the Y-axis direction is determined as follows according to the AD value on the Y-axis in the physical movable range 170.

(1) In a case where the AD value is $Y'_{min}$ or less, the output value is set to 0.
(2) In a case where the AD value is between $Y'_{min}$ and $Y_{center}$, the output value is determined by linear interpolation to set an output value ranging from 0 to 128.
(3) In a case where the AD value is between $Y_{center}$ and $Y'_{max}$, the output value is determined by linear interpolation to set an output value ranging from 128 to 255.
(4) In a case where the AD value is $Y'_{max}$ or more, the output value is set to 255.

As illustrated in FIG. 8 and FIG. 9, on the analog stick setting screen 130, the user can set a sensitivity curve of any shape (the adjusted sensitivity curve 144) that may include a dead zone. The operation information generation unit 114 of the controller 6 needs to reflect the setting value for the sensitivity curve of any shape in output values of the analog stick 77.

FIG. 11 is a flowchart illustrating an operation of the controller 6. The operation detection unit 112 acquires, in a case where an operation for tilting the analog stick 77 is input, an AD value corresponding to the amount of the operation (in other words, the tilt amount of the analog stick 77) (S10). The operation information generation unit 114 acquires a temporary value (x, y) in an orthogonal coordinate system with the center as 0 on the basis of the AD value acquired in S10 (S11). To prevent the decrease in calculation accuracy in later stages, in S11, a relatively high-precision value is acquired, specifically, a numerical value range of -32767 to 32767 is used.

The operation information generation unit 114 converts the value (x, y) in the orthogonal coordinate system acquired in S11 to a value (r, θ) in a polar coordinate system (S12). The operation information generation unit 114 derives a radial value r on the basis of Equation 1.

[Math. 1]

$$\ldots \text{(Equation 1)}$$

Further, as indicated in Equation 2 and Equation 3, the operation information generation unit 114 derives $\tan^2\theta$ and $1/\tan^2\theta$ without deriving a deflection angle θ.

[Math. 2]

$$x \qquad x^2 \qquad \ldots \text{(Equation 2)}$$
$$\tan^2\theta \qquad y^2 \qquad \ldots \text{(Equation 3)}$$

$\tan^2\theta$ and $1/\tan^2\theta$ can be calculated using only multiplication and division. Further, the deflection angle θ remains constant in this processing. Therefore, the conversion from the polar coordinate system to the orthogonal coordinate system in the later stage can be performed using $\tan^2\theta$ and $1/\tan^2\theta$. By such a procedure, the need for the calculation of trigonometric functions (derivation of $\tan^{-1}\theta$ and θ) is eliminated, so that the computation load can be reduced. Note that, in a case where x = 0 or y = 0, the calculations in Equation 2 and Equation 3 are not performed.

The operation information generation unit 114 converts the radial value r determined in S12 to a value r' reflecting the sensitivity set for the analog stick 77, on the basis of sensitivity curve information regarding the analog stick 77, which is indicated by profile information stored in the profile storage unit 102 (S13).

For example, it is assumed that information regarding the vertex 1 to the vertex 4 of the adjusted sensitivity curve 144 of FIG. 9 has been set as sensitivity curve information regarding the analog stick 77.

FIG. 12 illustrates an example of the value (r, θ) in the polar coordinate system before sensitivity application, and FIG. 13 illustrates an example of a value (r', θ) in the polar coordinate system after sensitivity application. The physical movable range 170 indicates the physical movable range of the analog stick 77. A logical movable range 176 corresponds to the logical movable range 172 of FIG. 10 and indicates the logical value range related to the radial value r. The logical movable range 176 is a circle smaller than the physical movable range 170 by a predetermined offset. In the embodiment, the logical movable range 176 is a circle with a radius 4% smaller than that of the physical movable range 170.

In a case where the radial value r is equal to or less than rDz (that is, is a value within a dead zone range 178), the value obtained after the adjustment is 0. $r'_1$ of FIG. 13 is a value corresponding to $r_1$ of FIG. 12 on the adjusted sensitivity curve 144. $r'_2$ of FIG. 13 is a value corresponding to $r_2$ of FIG. 12 on the adjusted sensitivity curve 144. $r'_{Max}$ of FIG. 13 is a value corresponding to $r_{Max}$ of FIG. 12 on the adjusted sensitivity curve 144. The operation information generation unit 114 uses linear interpolation between the vertices of the adjusted sensitivity curve 144 with the radial value r obtained in S12 as input, to derive the corresponding output value r'.

The operation information generation unit 114 converts the value (r', θ) in the polar coordinate system obtained after the radial value conversion to a value (x', y') in the orthogonal coordinate system (S14). The operation information generation unit 114 derives values of x' (denoted as x in Equation 4) and y' (denoted as y in Equation 5) on the basis of Equation 4 and Equation 5.

[Math. 3]

$$\cos^{-}\theta \qquad \left( \sqrt{1 + \tan^{2}\theta} \right) \qquad \sqrt{1 + A} \qquad ... \text{(Equation 4)}$$

[Math. 4]

$$\tan^{2}\theta \qquad ... \text{(Equation 5)}$$

In a case where x = 0 or y = 0, the calculations in Equation 4 and Equation 5 are not performed. Further, the signs of x' and y' are the same as the signs of x and y obtained before the conversion to the polar coordinate system.

The operation information generation unit 114 converts the temporary value (x', y') in the orthogonal coordinate system with the center value of 0 to an output value $(x_{out}, y_{out})$ ranging from 0 to 128 or from 128 to 255 in a default format as operation information (S15). The output value $(x_{out}, y_{out})$ is a value in the orthogonal coordinate system with a lower limit of 0, a center value of 128, and an upper limit of 255, as illustrated in FIG. 10. While the value range of (x', y') is high precision (-32767 to 32767) as with that of (x, y), the value range of the output value $(x_{out}, y_{out})$ is determined to low precision (0 to 255).

The operation information generation unit 114 generates operation information including the above-mentioned output value $(x_{out}, y_{out})$ as operation information based on the user operation on the analog stick 77. The operation information transmission unit 116 transmits the operation information generated by the operation information generation unit 114 to the information processing apparatus 10 (S16).

The application execution unit 216 of the information processing apparatus 10 executes the application by using the output value $(x_{out}, y_{out})$ based on the operation performed by the user and reflects, for example, the output value $(x_{out}, y_{out})$ in the movement of the game character. Further, the setting screen generation unit 218 of the information processing apparatus 10 places the adjusted operation amount indicator 154 of the setting status image 148 on the analog stick setting screen 130 at a position based on the output value $(x_{out}, y_{out})$.

With the first feature of the information processing system 1 of the embodiment, the value in the orthogonal coordinate system based on an operation performed by the user on the analog input device is once converted to a value in the polar coordinate system, and then, the sensitivity characteristics of the analog input device are reflected in the value obtained after the conversion. With this, the computation load for reflecting, in output values of the controller 6 based on operations performed by the user on the analog input device, the sensitivity set for the analog input device can be reduced.

Further, as described in relation to FIG. 10, the controller 6 generates a value ranging from the minimum value to the maximum value (a value ranging from 0 to 255), which is settable in the operation information, on the basis of an operation in a range narrower than the physical movable range 170 of the analog stick 77 by a predetermined offset (the logical movable range 176). With this, even when the physical movable range of the analog stick 77 moves by the offset over time, a predetermined output value range (the minimum value to the maximum value) can be maintained. The first feature of the information processing system 1 can be applied not only to the analog stick 77 but also to other types of analog input devices such as the trigger button 84.

Next, as an operation related to the second feature of the information processing system 1, mainly, the adjustment and operation related to the trigger button 84 (the R2 button 84a and the L2 button 84b) are described.

FIG. 14(a), FIG. 14(b), and FIG. 14(c) each illustrate a relation between the setting of the trigger stopper 87 and a normalization range 180. FIG. 14(a) illustrates the relation in a case where the trigger stopper 87 is set to the first stage (the rotatable angle of the trigger button 84 is 26 degrees). FIG. 14(b) illustrates the relation in a case where the trigger stopper 87 is set to the second stage (the rotatable angle of the trigger button 84 is 14 degrees). FIG. 14(c) illustrates the relation in a case where the trigger stopper 87 is set to the third stage (the rotatable angle of the trigger button 84 is 10 degrees).

At the time of manufacturing the controller 6, with a plurality of positions between the release state and full-stroke state of the trigger button 84 set as correction points, characteristic values (AD values in the embodiment) are measured at each correction point. The plurality of correction points in the embodiment include nine correction points from a correction point P0 at the release position to a correction point P8 at the full-stroke position. The correction point P8 is also the position at which the physical stopper is set. P0 to P8 are provided at equal intervals. Note that, at the time of manufacturing the controller 6, nine correction points are provided for each of the first stage, second stage, and third stage of the trigger stopper 87 and AD values are measured at each correction point.

The normalization range 180 is the range in which the output value is normalized to a value in the range of 0 to 255. For the first stage of the trigger stopper 87, the range of P2 to P7 serves as the normalization range 180. For the second stage of the trigger stopper 87, the range of P2 to P6 serves as the normalization range 180. For the third stage of the trigger stopper 87, the range of P3 to P5 serves as the normalization range 180. In such a manner, the more the rotatable angle of the trigger button 84 is limited, the narrower the normalization range 180 becomes.

A release-side offset 182 is a play region provided on the P0 side, which is achieved by hardware. A full-stroke-side offset 184 is a play region provided on the P8 side, which is achieved by hardware. In the release-side offset 182 and the full-stroke-side offset 184, output values from the controller 6 do not change. For example, when the tilt amount of the analog stick 77 is within the range of the release-side offset 182, the output value takes a constant value of "0." Further, when the tilt amount of the analog stick 77 is within the range of the full-stroke-side offset 184, the output value takes a constant value of "255."

FIG. 15 illustrates a relation between the setting of the trigger stopper 87 and the dead zone. The dead zone is set on the analog stick setting screen 130, independent of the setting of the trigger stopper 87. In a case where no dead zone is set, the range excluding the release-side offset 182 and the full-stroke-side offset 184 from the rotatable range serves as the normalization range 180 in which values ranging from 0 to 255 are output.

On the other hand, in a case where a dead zone is set, the range excluding the release-side offset 182 and the full-stroke-side offset 184 as well as a release-side dead zone 186 and a full-stroke-side dead zone 188 from the rotatable range serves as the normalization range 180. The release-side dead zone 186 is a dead zone provided on the release side (P0 side), and the full-stroke-side dead zone 188 is a dead zone provided on the full stroke side (P8 side).

FIG. 16 illustrates an example of a trigger setting screen 300. The trigger setting screen 300 of FIG. 16 includes content for setting the dead zone of the trigger button 84 (the R2 button 84a and the L2 button 84b) of the controller 6. Specifically, the trigger setting screen 300 includes an R2 dead zone setting area 302a, an R2 behavior confirmation area 304a, an L2 dead zone setting area 302b, and an L2 behavior confirmation area 304b.

The R2 dead zone setting area 302a is an area for inputting a setting value for the dead zone of the R2 button 84a, and the L2 dead zone setting area 302b is an area for inputting a setting value for the dead zone of the L2 button 84b. In the embodiment, in the R2 dead zone setting area 302a and the L2 dead zone setting area 302b, the starting point and ending point of an effective range (corresponding to the normalization range 180 of FIG. 15) are specified as percentages. The value of the starting point is a value specifying the range of the release-side dead zone 186, in other words, a value specifying the boundary between the release-side dead zone 186 and the normalization range 180. The value of the ending point is a value specifying the range of the full-stroke-side dead zone 188, in other words, a value specifying the boundary between the full-stroke-side dead zone 188 and the normalization range 180.

In the example of FIG. 16, no dead zone is set for the R2 button 84a, and the entire input range is specified as the effective range. Meanwhile, for the L2 button 84b, 50% on the starting point side is specified as the dead zone (the release-side dead zone 186), and 50% on the ending point side is specified as the effective range.

The L2 behavior confirmation area 304b is an area in which the magnitude of a system input value corresponding to the rotation operation of the L2 button 84b is displayed, and an operation amount indicator 306 indicating the operation amount of the L2 button 84b (system input value) is displayed. Although not illustrated in FIG. 16, also in the R2 behavior confirmation area 304a, the operation amount indicator 306 indicating the operation amount of the R2 button 84a (system input value) corresponding to the rotation operation of the R2 button 84a may be displayed. In the R2 behavior confirmation area 304a and the L2 behavior confirmation area 304b, the part corresponding to the dead zone is displayed with relatively low brightness, and the part corresponding to the effective range is displayed with relatively high brightness.

The user inputs a setting value for the input range (in other words, a setting value for the dead zone) of the R2 button 84a in the R2 dead zone setting area 302a, and/or inputs a setting value for the input range (in other words, a setting value for the dead zone) of the L2 button 84b in the L2 dead zone setting area 302b. The profile update instruction unit 222 of the information processing apparatus 10 transmits a profile update instruction including the setting value input in the R2 dead zone setting area 302a and the setting value input in the L2 dead zone setting area 302b to the controller 6. The profile update unit 118 of the controller 6 reflects the setting values for the dead zones transmitted from the information processing apparatus 10 in profile information in the profile storage unit 102.

FIG. 17 illustrates relations between the correction points and output values of the controller 6. FIG. 17 illustrates the relations in a case where the trigger stopper 87 is set to the first stage and no dead zone is set. In a case where no dead zone is set, the allocation unit 120 of the controller 6 allocates the minimum output value of 0 to P2 at the release-side end of the normalization range 180, and allocates the maximum output value of "255" to P7 at the full-stroke-side end of the normalization range 180. The allocation unit 120 allocates values dividing 0 to 255 into five equal parts to each of P3, P4, P5, and P6. The allocation unit 120 stores, for each of the plurality of correction points P0 to P8, pairs of the AD values measured at the time of manufacturing the controller 6 and output values allocated to each correction point, in the correction point information storage unit 104.

The operation detection unit 112 of the controller 6 detects, in a case where a user operation is input to the trigger button 84, an AD value based on the user operation. The operation information generation unit 114 of the controller 6 derives an output value corresponding to the input user operation on the basis of the AD value detected by the operation detection unit 112 and an AD value and an output value associated with at least one correction point. Specifically, the operation information generation unit 114 derives the output value (a value in the range of 0 to 255) corresponding to the user operation by linear interpolation based on the magnitude relations between the AD value based on the user operation and the AD values of each correction point.

Thereafter, as already described, the operation information generation unit 114 generates operation information including the output value corresponding to the user operation. The operation information transmission unit 116 transmits the operation information to the information processing apparatus 10. The application execution unit 216 of the information processing apparatus 10 executes the application on the basis of the output value corresponding to the user operation, which is indicated by the operation information transmitted from the controller 6.

FIG. 18 also illustrates relations between the correction points and output values of the controller 6. FIG. 18 illustrates the relations in a case where the trigger stopper 87 is set to the first stage and a dead zone is set. On the trigger setting screen 300 illustrated in FIG. 16, the user can set the release-side dead zone 186 and the full-stroke-side dead zone 188 to any size regardless of the positions of the correction points. In the example of FIG. 18, the boundary of the release-side dead zone 186 is set between P3 and P4, while the full-stroke-side dead zone 188 is not set. In this case, when output values corresponding to P4, P5, and P6 are set to the values illustrated in FIG. 17, the linearity of output values based on user operations cannot be maintained.

Therefore, in the embodiment, the allocation unit 120 of the controller 6 dynamically changes an output value corresponding to at least one correction point according to the setting of the dead zone of the trigger button 84. Specifically, the allocation unit 120 allocates, in a case where a dead zone is set for the trigger button 84, new output values to each correction point outside the dead zone range such that the minimum value of 0 to the maximum value of 255 of the output value correspond to the rotatable range of the trigger button 84 excluding the dead zone. The range outside the dead zone can also be called the effective range.

The allocation unit 120 allocates new output values to each correction point outside the release-side dead zone 186 and the full-stroke-side dead zone 188 such that the minimum value of 0 to the maximum value of 255 of the output value correspond to the rotatable range of the trigger button 84 excluding the release-side dead zone 186 and the full-stroke-side dead zone 188 which have been set. Further, the allocation unit 120 allocates, each time the release-side dead zone 186 or the full-stroke-side dead zone 188 related to the trigger button 84 is newly set or changed, new output values to each correction point outside each dead zone range.

Note that the allocation unit 120 allocates the minimum value of 0 of the output value to the range of the rotation start position P0 of the trigger button 84 to a predetermined correction point. The predetermined correction point is, in the embodiment, the correction point with the largest rotation amount (AD value) among the correction points included in the release-side offset 182 and the correction points included in the release-side dead zone 186.

Further, the allocation unit 120 allocates the maximum value of 255 of the output value to the range of a predetermined correction point to the rotation end position P8 of the trigger button 84. The predetermined correction point is, in the embodiment, the correction point with the smallest rotation amount (AD value) among the correction points included in the full-stroke-side offset 184 and the correction points included in the full-stroke-side dead zone 188. In such a manner, play regions are provided near the release position and full-stroke position of the trigger button 84, so that the operability of the trigger button 84 can be improved.

FIG. 19 illustrates an example of allocating new output values to the correction points. Here, the trigger stopper 87 is set to the first stage. In a case where no dead zone is set, the range of P2 to P7 serves as the normalization range 180, and the allocation unit 120 allocates output values corresponding to each correction point such that each interval divided by the correction points divides 0 to 255 into five equal parts.

Next, it is assumed that the release-side dead zone 186 has been set from P2 to a starting point Pr between P3 and P4 and that the full-stroke-side dead zone 188 has been set from an ending point Pf between P6 and P7 to P7. In this case, the rotatable range of the trigger button 84 excluding the release-side dead zone 186 and the full-stroke-side dead zone 188 (that is, the normalization range 180) is the range of Pr to Pf. The allocation unit 120 sets the minimum value of 0 to Pr and the maximum value of 255 to Pf, and allocates new output values Np4, Np5, and Np6 to P4, P5, and P6 such that 0 to 255 are allocated to the interval of Pr to Pf.

In FIG. 19, the size of the release-side dead zone 186 is specified as x% of the normalization range 180 available in a case where no dead zone is set (P2 to P7). Further, the size of the full-stroke-side dead zone 188 is specified as y% of the normalization range 180 available in a case where no dead zone is set (P2 to P7). Both x and y are values in the range of 0 to 99.

The allocation unit 120 derives the ratio of the range of Pr to P4 to the normalization range 180 available in a case where no dead zone is set (P2 to P7), by using Equation 6.

$$(20-(x-20*m))\% \quad \cdots \quad (\text{Equation } 6)$$

m is the number of correction point intervals included in the release-side dead zone 186 and takes a value ranging from 0 to 4. In FIG. 19, m = 1.

The allocation unit 120 derives output values for P4, P5, and P6 by using Equation 7 to Equation 9.

$$Np4 = 255*(20-(x-20*m))/(100-x-y) \ ... \ (Equation\ 7)$$

$$Np5 = Np4+255*20/(100-x-y) \ ... \ (Equation\ 8)$$

$$Np6 = Np5+255*20/(100-x-y) \ ... \ (Equation\ 9)$$

FIG. 20 also illustrates an example of allocating new output values to the correction points. Here as well, the trigger stopper 87 is set to the first stage. In FIG. 20, the release-side dead zone 186 (with the setting value x of 24%) is set from P2 to the starting point Pr between P3 and P4. The full-stroke-side dead zone 188 is not set.

In this case, the allocation unit 120 derives the ratio of the range of Pr to P4 to the normalization range 180 available in a case where no dead zone is set (P2 to P7) as 16% by using Equation 6 described above. Further, the allocation unit 120 derives Np4 as 54, Np5 as 121, and Np6 as 188 by using Equation 7 to Equation 9 described above.

The allocation unit 120 stores, for the correction points for which new output values have been derived, pairs of the characteristic values of the correction points and the new output values in the correction point information storage unit 104. The operation information generation unit 114 generates operation information based on a user operation on the trigger button 84 by using the characteristic values and output values (new output values) of the plurality of correction points.

A case where the rotatable range of the trigger button 84 is limited by the trigger stopper 87 and a dead zone (at least one of the release-side dead zone 186 and the full-stroke-side dead zone 188) is set for the trigger button 84 is considered. In this case, the allocation unit 120 detects, as the normalization range 180, the range excluding the dead zone from the rotatable range of the trigger button 84 limited by the trigger stopper 87. The allocation unit 120 allocates new output values to each correction point within the normalization range 180 (in other words, outside the dead zone range) such that the minimum value of 0 to the maximum value of 255 of the output value correspond to the normalization range 180.

The value "20" included in Equation 6 to Equation 9 described above is a fixed value for a case where the trigger stopper 87 is set to the first stage, and is the ratio (%) of a single correction point interval (for example, P2 to P3) to the normalization range 180 available in a case where no dead zone is set (P2 to P7). This ratio is hereinafter referred to as an "interval ratio."

As already described, in a case where the trigger stopper 87 is set to the second stage, the maximum rotation angle of the trigger button 84 is limited to 14 degrees. Further, as illustrated in FIG. 14(b), the normalization range 180 is the range of P2 to P6, and the interval ratio is 25%. Thus, in this case, the equations obtained by replacing "20" with "25" in Equation 5 to Equation 9 described above are used.

Further, in a case where the trigger stopper 87 is set to the third stage, the maximum rotation angle of the trigger button 84 is limited to 10 degrees. Moreover, as illustrated in FIG. 14(c), the normalization range 180 is the range of P3 to P5, and the interval ratio is 50%. Thus, in this case, the equations obtained by replacing "20" with "50" in Equation 5 to Equation 9 described above are used.

The allocation unit 120 detects that an operation using the trigger stopper 87 to limit the rotatable range of the trigger button 84 has been input. This operation may be, for example, an operation for switching the stage by sliding the switch of the trigger stopper 87. The allocation unit 120 allocates, each time an operation for limiting the rotatable range of the trigger button 84 is input and each time a dead zone is set (newly set, changed, or the like) for the trigger button 84, new output values to each correction point outside the dead zone range.

Note that the allocation unit 120 allocates the minimum value of the output value to more correction points as the rotatable range of the trigger button 84 is more narrowly limited by the trigger stopper 87. Further, the allocation unit 120 allocates the maximum value of the output value to more correction points as the rotatable range of the trigger button 84 is more narrowly limited by the trigger stopper 87.

For example, as illustrated in FIG. 14(a) and FIG. 14(b), in a case where the trigger stopper 87 is set to the first stage or the second stage and no dead zone is set, P2 serves as the starting point of the normalization range 180. In this case, the allocation unit 120 allocates the output value of 0 (minimum value) to P0, P1, and P2. In contrast, as illustrated in FIG. 14(c), in a case where the trigger stopper is set to the third stage and no dead zone is set, P3 serves as the starting point of the normalization range 180. In this case, the allocation unit 120 allocates the output value of 0 to P0, P1, P2, and P3.

Further, as illustrated in FIG. 14(a), in a case where the trigger stopper 87 is set to the first stage and no dead zone is set, P7 serves as the ending point of the normalization range 180. In this case, the allocation unit 120 allocates the output value of 255 (maximum value) to P7 and P8. In contrast, as illustrated in FIG. 14(b), in a case where the trigger stopper 87 is set to the second stage and no dead zone is set, P6 serves as the ending point of the normalization range 180. In this case, the allocation unit 120 allocates the output value of 255 to P6, P7, and P8. Moreover, when the trigger stopper 87 is set to the third stage and no dead zone is set, P5 serves as the ending point of the normalization range 180. In this case, the allocation unit 120 allocates the output value of 255 to P5, P6, P7, and P8.

With the second feature of the information processing system 1 of the embodiment, the linearity of output values associated with user operations on the trigger button 84 having set thereto the release-side dead zone 186 and/or the full-stroke-side dead zone 188 can be maintained. The second feature of the information processing system 1 can be applied not only to the trigger button 84 but also to other types of analog input devices for which dead zones can be set, such as the analog stick 77.

The present invention has been described above on the basis of the embodiment. This embodiment is exemplary, and it is to be understood by those skilled in the art that various modifications are possible for combinations of components and processing processes, and that such modifications are also within the scope of the present invention.

Any combination of the embodiment and modifications described above is also useful as an embodiment of the present invention. The new embodiment resulting from the combination has the effects of the embodiment and modifications combined. Further, it is also to be understood by those skilled in the art that the functions to be served by each constituent feature described in the claims are achieved by individual components described in the embodiment and the modifications, or by their cooperation.

The technical ideas described in the above-mentioned embodiment and modifications can be expressed as aspects described in each item below.

[Item 1-1]

An operation apparatus including:

an analog input device;
a storage unit configured to store setting information associated with sensitivity of the analog input device;
a generation unit configured to generate operation information based on an operation performed by a user on the analog input device; and
a transmission unit configured to transmit the operation information generated by the generation unit to an external information processing apparatus, in which
the generation unit is configured to

(A) acquire a value in an orthogonal coordinate system based on an operation amount of the analog input device,
(B) convert the value in the orthogonal coordinate system to a value in another coordinate system,
(C) convert the value in the another coordinate system on the basis of the sensitivity of the analog input device indicated by the setting information, and
(D) convert the value in the another coordinate system obtained after the conversion based on the sensitivity of the analog input device to a value in the orthogonal coordinate system that is to be set in the operation information.

With this operation apparatus, the value in the orthogonal coordinate system is once converted to a value in another coordinate system that is advantageous in terms of computation load, and then, the sensitivity of the analog input device is reflected. With this, it is possible to reduce the computation load for reflecting, in output values of the operation apparatus based on operations performed by the user on the analog input device, the sensitivity set for the analog input device.

[Item 1-2]

The operation apparatus according to Item 1-1, in which
the another coordinate system is a polar coordinate system.

With this operation apparatus, the value in the orthogonal coordinate system is once converted to a value in the polar coordinate system that is advantageous in terms of computation load, and then the sensitivity of the analog input device is reflected. With this, it is possible to reduce the computation load for reflecting, in output values of the operation apparatus based on operations performed by the user on the analog input device, the sensitivity set for the analog input device.

[Item 1-3]

The operation apparatus according to Item 1-2, in which,

in the (B), the generation unit derives a radial value of the polar coordinate system while not deriving a value of a deflection angle, and,
in the (C), the generation unit converts the radial value of the polar coordinate system on the basis of the sensitivity of the analog input device indicated by the setting information.

With this operation apparatus, the deflection angle is not derived in the polar coordinate conversion, so that the computation load can be reduced.

[Item 1-4]

The operation apparatus according to any one of Items 1-1 to 1-3, in which,

in the (A), the generation unit acquires a relatively high-precision value as the value in the orthogonal coordinate system based on the operation amount of the analog input device, and,
in the (D), the generation unit converts the value in the another coordinate system obtained after the conversion based on the sensitivity of the analog input device to the value in the orthogonal coordinate system, and further converts the value in the orthogonal coordinate system obtained after the conversion to a relatively low-precision value.

With this operation apparatus, the high-precision value is used for sensitivity reflection calculations, so that the decrease in calculation accuracy can be prevented.

[Item 1-5]

The operation apparatus according to any one of Items 1-1 to 1-4, in which
the generation unit generates a value ranging from a minimum value to a maximum value, the value being settable in the operation information, on the basis of an operation in a range narrower than a physical possible range of the analog input device by a predetermined offset.
With this operation apparatus, even when the physical movable range of the analog input device moves by the offset over time, a predetermined output value range can be maintained.

[Item 1-6]

An operation apparatus including:

an analog input device;
a storage unit configured to store setting information associated with sensitivity of the analog input device; and
a processor, in which
the processor executes processing of generating operation information based on an operation performed by a user on the analog input device and processing of transmitting the operation information generated to an external information processing apparatus, and
the processing of generating includes

(A) acquiring a value in an orthogonal coordinate system based on an operation amount of the analog input device,
(B) converting the value in the orthogonal coordinate system to a value in another coordinate system,
(C) converting the value in the another coordinate system on the basis of the sensitivity of the analog input device indicated by the setting information, and
(D) converting the value in the another coordinate system obtained after the conversion based on the sensitivity of the analog input device to a value in the orthogonal coordinate system that is to be set in the operation information.

With this operation apparatus, the value in the orthogonal coordinate system is once converted to a value in another coordinate system that is advantageous in terms of computation load, and then, the sensitivity of the analog input device is reflected. With this, it is possible to reduce the computation load for reflecting, in output values of the operation apparatus based on operations performed by the user on the analog input device, the sensitivity set for the analog input device.

[Item 1-7]

An information processing method executed by an operation apparatus that includes an analog input device and a storage unit configured to store setting information associated with sensitivity of the analog input device, the information processing method including:

a step of generating operation information based on an operation performed by a user on the analog input device; and
a step of transmitting the operation information generated in the step of generating to an external information processing apparatus, in which
the step of generating includes

(A) acquiring a value in an orthogonal coordinate system based on an operation amount of the analog input device,
(B) converting the value in the orthogonal coordinate system to a value in another coordinate system,
(C) converting the value in the another coordinate system on the basis of the sensitivity of the analog input device indicated by the setting information, and
(D) converting the value in the another coordinate system obtained after the conversion based on the sensitivity of the analog input device to a value in the orthogonal coordinate system that is to be set in the operation information.

With this information processing method, the value in the orthogonal coordinate system is once converted to a value in another coordinate system that is advantageous in terms of computation load, and then, the sensitivity of the analog input device is reflected. With this, in the operation apparatus, it is possible to reduce the computation load for reflecting, in output values of the operation apparatus based on operations performed by the user on the analog input device, the sensitivity set for the analog input device.

[Item 1-8]

A computer program for causing an operation apparatus that includes an analog input device and a storage unit configured to store setting information associated with sensitivity of the analog input device to achieve:

a function of generating operation information based on an operation performed by a user on the analog input device; and
a function of transmitting the operation information generated by the function of generating to an external information processing apparatus, in which
the function of generating includes

(A) acquiring a value in an orthogonal coordinate system based on an operation amount of the analog input device,
(B) converting the value in the orthogonal coordinate system to a value in another coordinate system,
(C) converting the value in the another coordinate system on the basis of the sensitivity of the analog input device indicated by the setting information, and
(D) converting the value in the another coordinate system obtained after the conversion based on the sensitivity of the analog input device to a value in the orthogonal coordinate system that is to be set in the operation information.

With this computer program, the value in the orthogonal coordinate system is once converted to a value in another coordinate system that is advantageous in terms of computation load, and then, the sensitivity of the analog input device is reflected. With this, in the operation information, it is possible to reduce the computation load for reflecting, in output values of the operation apparatus based on operations performed by the user on the analog input device, the sensitivity set for the analog input device.

[Item 2-1]

An operation apparatus including:

an analog input device to be operated by a user;
a storage unit configured to store a characteristic value measured at each of a plurality of correction points with different movement amounts of the analog input device;

an allocation unit configured to allocate an output value indicating a magnitude of an operation to each of the plurality of correction points; and

an output unit configured to externally output, in a case where an operation is input to the analog input device, an output value that corresponds to the operation input and that is based on the characteristic value measured and a characteristic value and an output value related to at least one of the correction points, in which the allocation unit allocates, in a case where a dead zone is set for the analog input device, a new output value to each of the correction points outside a range of the dead zone such that a minimum value to a maximum value of the output value correspond to a movable range of the analog input device excluding the dead zone.

With this operation apparatus, the linearity of output values associated with user operations on the analog input device having set thereto a dead zone can be maintained.

[Item 2-2]

The operation apparatus according to Item 2-1, in which,

for the analog input device, one of or both a first dead zone on an operation start side and a second dead zone on an operation end side are settable as the dead zone, and

the allocation unit allocates the new output value to each of the correction points outside a range of the set first dead zone and a range of the set second dead zone such that the minimum value to the maximum value of the output value correspond to the movable range of the analog input device excluding the first dead zone and the second dead zone that have been set.

With this operation apparatus, even in a case where the dead zone is set on one of or both the operation start side and operation end side of the analog input device, the linearity of output values associated with user operations on the analog input device can be maintained.

[Item 2-3]

The operation apparatus according to Item 2-1 or 2-2, in which the allocation unit allocates, each time the dead zone is set for the analog input device, the new output value to each of the correction points outside the range of the dead zone.

With this operation apparatus, the linearity of output values associated with user operations on the analog input device can be maintained in response to the setting or change of the dead zone.

[Item 2-4]

The operation apparatus according to any one of Items 2-1 to 2-3, further including:

a limitation unit configured to limit the movable range of the analog input device, in which the allocation unit allocates, in a case where the movable range of the analog input device is limited and a dead zone is set for the analog input device, the new output value to each of the correction points outside the range of the dead zone such that the minimum value to the maximum value of the output value correspond to the movable range excluding the dead zone from the movable range of the analog input device limited.

With this operation apparatus, even in a case where the movable range (for example, the stroke range or rotation range) of the analog input device is limited, the linearity of output values associated with user operations on the analog input device having set thereto a dead zone can be maintained.

[Item 2-5]

The operation apparatus according to Item 2-4, in which the allocation unit allocates, each time an operation for limiting the movable range of the analog input device is input or each time the dead zone is set for the analog input device, the new output value to each of the correction points outside the range of the dead zone. With this operation apparatus, the linearity of output values associated with user operations on the analog input device can be maintained in response to changes in the movable range of the analog input device or changes in dead zone.

[Item 2-6]

The operation apparatus according to any one of Items 2-1 to 2-5, in which
the allocation unit allocates the minimum value of the output value to a range of a movement start position of the analog input device to a predetermined correction point, or allocates the maximum value of the output value to a range of a predetermined correction point to a movement end position of the analog input device.

With this operation apparatus, a play region is provided at one of or both the movement start position (for example, release position or initial position) and movement end position (for example, full-stroke position) of the analog input device, so that the operability of the analog input device can be improved.

[Item 2-7]

The operation apparatus according to any one of Items 2-1 to 2-6, further including:

a limitation unit configured to limit the movable range of the analog input device, in which,
as the movable range of the analog input device becomes narrower, the allocation unit allocates the minimum value of the output value to more correction points or allocates the maximum value of the output value to more correction points.

With this operation apparatus, even in a case where the movable range (for example, the stroke range or rotation range) of the analog input device is limited, the linearity of output values associated with user operations on the analog input device having set thereto a dead zone can be maintained.

[Item 2-8]

An operation apparatus including:

an analog input device to be operated by a user;
a storage unit configured to store a characteristic value measured at each of a plurality of correction points with different movement amounts of the analog input device; and
a processor, in which
the processor allocates an output value indicating a magnitude of an operation to each of the plurality of correction points,
the processor externally outputs, in a case where an operation is input to the analog input device, an output value that corresponds to the operation input and that is based on the characteristic value measured and a characteristic value and an output value related to at least one of the correction points, and
the processor allocates, in a case where a dead zone is set for the analog input device, a new output value to each of the correction points outside a range of the dead zone such that a minimum value to a maximum value of the output value correspond to a movable range of the analog input device excluding the dead zone.

With this operation apparatus, the linearity of output values associated with user operations on the analog input device having set thereto a dead zone can be maintained.

[Item 2-9]

An information processing method executed by an operation apparatus that includes an analog input device to be operated by a user and a storage unit configured to store a characteristic value measured at each of a plurality of correction points with different movement amounts of the analog input device, the information processing method including:

a step of allocating an output value indicating a magnitude of an operation to each of the plurality of correction points; and
a step of externally outputting, in a case where an operation is input to the analog input device, an output value that corresponds to the operation input and that is based on the characteristic value measured and a characteristic value and an output value related to at least one of the correction points, in which
the step of allocating includes allocating, in a case where a dead zone is set for the analog input device, a new output value to each of the correction points outside a range of the dead zone such that a minimum value to a maximum value of the output value correspond to a movable range of the analog input device excluding the dead zone. With this information processing method, in the operation apparatus, the linearity of output values associated with user operations on the analog input device having set thereto a dead zone can be maintained.

[Item 2-10]

A computer program for causing an operation apparatus that includes an analog input device to be operated by a user and a storage unit configured to store a characteristic value measured at each of a plurality of correction points with different movement amounts of the analog input device to achieve:

a function of allocating an output value indicating a magnitude of an operation to each of the plurality of correction points; and
a function of externally outputting, in a case where an operation is input to the analog input device, an output value that corresponds to the operation input and that is based on the characteristic value measured and a characteristic value and an output value related to at least one of the correction points, in which
the function of allocating includes allocating, in a case where a dead zone is set for the analog input device, a new output value to each of the correction points outside a range of the dead zone such that a minimum value to a maximum value of the output value correspond to a movable range of the analog input device excluding the dead zone.

This computer program allows the operation apparatus to maintain the linearity of output values associated with user operations on the analog input device having set thereto a dead zone.

[Industrial Applicability]

The present invention can be applied to operation apparatuses, information processing systems, and the like.

[Reference Signs List]

1: Information processing system
6: Controller
10: Information processing apparatus
77: Analog stick
84: Trigger button
87: Trigger stopper
102: Profile storage unit
104: Correction point information storage unit
114: Operation information generation unit
116: Operation information transmission unit
120: Allocation unit

**Claims**

1. An operation apparatus comprising:

an analog input device;
a storage unit configured to store setting information associated with sensitivity of the analog input device;
a generation unit configured to generate operation information based on an operation performed by a user on the analog input device; and
a transmission unit configured to transmit the operation information generated by the generation unit to an external information processing apparatus, wherein
the generation unit is configured to

(A) acquire a value in an orthogonal coordinate system based on an operation amount of the analog input device,
(B) convert the value in the orthogonal coordinate system to a value in another coordinate system,
(C) convert the value in the another coordinate system on a basis of the sensitivity of the analog input device indicated by the setting information, and

(D) convert the value in the another coordinate system obtained after the conversion based on the sensitivity of the analog input device to a value in the orthogonal coordinate system that is to be set in the operation information.

2.  The operation apparatus according to claim 1, wherein
    the another coordinate system is a polar coordinate system.

3.  The operation apparatus according to claim 2, wherein,

    in the (B), the generation unit derives a radial value of the polar coordinate system while not deriving a value of a deflection angle, and,
    in the (C), the generation unit converts the radial value of the polar coordinate system on a basis of the sensitivity of the analog input device indicated by the setting information.

4.  The operation apparatus according to claim 1, wherein,

    in the (A), the generation unit acquires a relatively high-precision value as the value in the orthogonal coordinate system based on the operation amount of the analog input device, and,
    in the (D), the generation unit converts the value in the another coordinate system obtained after the conversion based on the sensitivity of the analog input device to the value in the orthogonal coordinate system, and further converts the value in the orthogonal coordinate system obtained after the conversion to a relatively low-precision value.

5.  The operation apparatus according to claim 1, wherein
    the generation unit generates a value ranging from a minimum value to a maximum value, the value being settable in the operation information, on a basis of an operation in a range narrower than a physical possible range of the analog input device by a predetermined offset.

6.  An operation apparatus comprising:

    an analog input device;
    a storage unit configured to store setting information associated with sensitivity of the analog input device; and
    a processor, wherein
    the processor executes processing of generating operation information based on an operation performed by a user on the analog input device and processing of transmitting the operation information generated to an external information processing apparatus, and
    the processing of generating includes

    (A) acquiring a value in an orthogonal coordinate system based on an operation amount of the analog input device,
    (B) converting the value in the orthogonal coordinate system to a value in another coordinate system,
    (C) converting the value in the another coordinate system on a basis of the sensitivity of the analog input device indicated by the setting information, and
    (D) converting the value in the another coordinate system obtained after the conversion based on the sensitivity of the analog input device to a value in the orthogonal coordinate system that is to be set in the operation information.

7.  An information processing method executed by an operation apparatus that includes an analog input device and a storage unit configured to store setting information associated with sensitivity of the analog input device, the information processing method comprising:

    a step of generating operation information based on an operation performed by a user on the analog input device; and
    a step of transmitting the operation information generated in the step of generating to an external information processing apparatus, wherein the step of generating includes

    (A) acquiring a value in an orthogonal coordinate system based on an operation amount of the analog input device,

(B) converting the value in the orthogonal coordinate system to a value in another coordinate system,

(C) converting the value in the another coordinate system on a basis of the sensitivity of the analog input device indicated by the setting information, and

(D) converting the value in the another coordinate system obtained after the conversion based on the sensitivity of the analog input device to a value in the orthogonal coordinate system that is to be set in the operation information.

8. A computer program for causing an operation apparatus that includes an analog input device and a storage unit configured to store setting information associated with sensitivity of the analog input device to achieve:

a function of generating operation information based on an operation performed by a user on the analog input device; and

a function of transmitting the operation information generated by the function of generating to an external information processing apparatus, wherein

the function of generating includes

(A) acquiring a value in an orthogonal coordinate system based on an operation amount of the analog input device,

(B) converting the value in the orthogonal coordinate system to a value in another coordinate system,

(C) converting the value in the another coordinate system on a basis of the sensitivity of the analog input device indicated by the setting information, and

(D) converting the value in the another coordinate system obtained after the conversion based on the sensitivity of the analog input device to a value in the orthogonal coordinate system that is to be set in the operation information.

# FIG.1

DISPLAY APPARATUS ~4

INFORMATION
PROCESSING
APPARATUS ~10

6

1

# FIG.2

81 85 86 79 85 82

71
71a
71b
71c
71d

74
75
76
72
73

77b 89 80 77a
88b 91 88a
88
78b 78a

6

# FIG.3

6

# FIG.4

```
              76                          96                        77a
      ┌─────────────────┐        ┌─────────────┐        ┌─────────────────────┐
      │ OPERATION BUTTON │       │             │        │  RIGHT ANALOG STICK  │ ┐
      └─────────────────┘        │             │        └─────────────────────┘ │
              .                  │             │              77b                │
              .                  │             │        ┌─────────────────────┐ ├ 77
              .      76          │             │        │  LEFT ANALOG STICK   │ │
      ┌─────────────────┐        │             │        └─────────────────────┘ ┘
      │ OPERATION BUTTON │       │             │              89
      └─────────────────┘        │             │        ┌─────────────────────┐
              71                 │             │        │       SPEAKER        │
      ┌─────────────────┐        │             │        └─────────────────────┘
      │  DIRECTIONAL KEY │       │             │              90
      └─────────────────┘        │             │        ┌─────────────────────┐
              82                 │             │        │       VIBRATOR       │
      ┌─────────────────┐        │  PROCESSOR  │        └─────────────────────┘
      │  OPTIONS BUTTON  │       │             │              92
      └─────────────────┘        │             │        ┌─────────────────────┐
              88a                │             │        │     STORAGE UNIT     │
   ┌  ┌─────────────────┐        │             │        └─────────────────────┘
   │  │  RIGHT FUNCTION  │       │             │              94
   │  │     BUTTON       │       │             │        ┌─────────────────────┐
88 ┤  └─────────────────┘        │             │        │    COMMUNICATION     │
   │          88b                │             │        │    CONTROL UNIT      │
   │  ┌─────────────────┐        │             │        └─────────────────────┘
   │  │  LEFT FUNCTION   │       │             │              87a
   └  │     BUTTON       │       │             │        ┌─────────────────────┐
      └─────────────────┘        │             │        │    RIGHT TRIGGER     │ ┐
              86                 │             │        │      STOPPER         │ │
      ┌─────────────────┐        │             │        └─────────────────────┘ ├ 87
      │ LIGHT-EMITTING UNIT │    │             │              87b                │
      └─────────────────┘        │             │        ┌─────────────────────┐ │
                                 │             │        │    LEFT TRIGGER      │ │
                                 └─────────────┘        │      STOPPER         │ ┘
                                       6               └─────────────────────┘
```

FIG.5

MAIN POWER BUTTON — 20
POWER ON LED — 21
STANDBY LED — 22
CLOCK — 26
SYSTEM CONTROLLER — 24
MEDIA DRIVE — 32
USB MODULE — 34
DEVICE CONTROLLER — 30
FLASH MEMORY — 36
WIRELESS COMMUNICATION MODULE — 38
WIRED COMMUNICATION MODULE — 40
SUB SYSTEM — 50
MAIN SYSTEM — 60
44
10
6
4

EP 4 614 288 A1

# FIG.6

110

### PROCESSING UNIT

112

| OPERATION DETECTION UNIT |

114

| OPERATION INFORMATION GENERATION UNIT |

116

| OPERATION INFORMATION TRANSMISSION UNIT |

118

| PROFILE UPDATE UNIT |

120

| ALLOCATION UNIT |

100

### STORAGE UNIT

102

PROFILE STORAGE UNIT

104

CORRECTION POINT INFORMATION STORAGE UNIT

6

# FIG.7

210

PROCESSING UNIT

212
PROFILE INFORMATION
ACQUISITION UNIT

222
PROFILE UPDATE
INSTRUCTION UNIT

214
OPERATION INFORMATION
RECEPTION UNIT

216
APPLICATION EXECUTION
UNIT

218
SETTING SCREEN
GENERATION UNIT

220
DISPLAY CONTROL UNIT

200

STORAGE UNIT

202
APPLICATION
STORAGE UNIT

204
PROFILE STORAGE UNIT

10

# FIG.8

130

## Stick Sensitivity/Dead Zone

**132** → Stick

**Left Stick** ▼

**134** → Sensitivity Curve

**Delayed** ▼

**136** → Curve Adjustment

**140** →
**142** →

18%

**144**

**146**

**138** → Dead Zone Adjustment

**148** → Use the directional buttons to adjust your settings and move the stick to see the result.

**150**

**156**

**154**

**152**

L1 / R1 Adjust Curve  L2 / R2 Adjust Dead Zone  ⬇ Undo Settings

EP 4 614 288 A1

# F I G . 9

# FIG.10

# FIG.11

```
                    ┌──────────────────────────┐
                    │          START           │
                    └──────────────────────────┘
```

S10

ACQUIRE AD VALUE

S11

ACQUIRE ORTHOGONAL COORDINATE SYSTEM VALUE (x, y)

S12

CONVERT VALUE TO POLAR COORDINATE SYSTEM VALUE
$(x, y) \rightarrow (r, \theta)$

S13

CONVERT RADIAL VALUE ACCORDING TO SENSITIVITY
$(r \rightarrow r')$

S14

CONVERT VALUE TO ORTHOGONAL COORDINATE SYSTEM VALUE
$(r', \theta) \rightarrow (x', y')$

S15

CONVERT VALUE TO VALUE IN DEFAULT FORMAT $(x_{out}, y_{out})$

S16

TRANSMIT OPERATION INFORMATION

```
                    ┌──────────────────────────┐
                    │           END            │
                    └──────────────────────────┘
```

# FIG.12

# FIG.13

# F I G . 1 4

(a)

RELEASE
P0
FULL STROKE
P8
182  180  184
P1  P2  P3  P4  P5  P6  P7
0  255

(b)

RELEASE
P0
FULL STROKE
P8
182  180  184
P1  P2  P3  P4  P5  P6  P7
0  255

(c)

RELEASE
P0
FULL STROKE
P8
182  180  184
P1  P2  P3  P4  P5  P6  P7
0  255

EP 4 614 288 A1

# FIG.15

RELEASE

FULL STROKE

# FIG.16

DEAD ZONE OF TRIGGER |  PROFILE 2

INPUT RANGE (L2)

STARTING POINT

50

ENDING POINT

100

INPUT RANGE (R2)

STARTING POINT

0

ENDING POINT

100

302b   304b   304a   302a

306   300

# FIG.17

RELEASE
P0

FULL STROKE
P8

P1    P2    P3    P4    180    P5    P6    P7

0    51    102    153    204    255

# FIG.18

RELEASE

P0

FULL STROKE

P8

EP 4 614 288 A1

# F I G . 1 9

RELEASE
P0

PRESS
P8

EP 4 614 288 A1

| P1 | P2 | P3 | Pr | P4 | P5 | P6 | Pf | P7 |

WITHOUT DEAD ZONE SETTING

20%　　20%　　20%　　20%　　20%

0　　51　　102　　153　　204　　255

WITH DEAD ZONE SETTING

20%　　20%

0　　Np4　　Np5　　Np6　　255

RELEASE-SIDE DEAD ZONE 186
$x\%$

$(20-(x-20*m))\%$

$(20-(y-20*n))\%$

FULL-STROKE-SIDE
DEAD ZONE 188
$y\%$

# F I G . 2 0

RELEASE
P0

PRESS
P8

P1　　　　　P2　　　　　P3　Pr　　　P4　　　　　P5　　　　　P6　　　　　P7

WITHOUT DEAD ZONE SETTING

20%　　　20%　　20%　　　20%　　　20%

0　　　　51　　　102　　　153　　　204　　　255

WITH DEAD ZONE SETTING

24%　　　16%　　20%　　　20%　　　20%

255

186

0　　　Np4　　　Np5　　　Np6
　　　　↓　　　　↓　　　　↓
　　　　54　　　121　　　188
　　(255*16/76)　(P4+255*20/76)　(P5+255*20/76)

EP 4 614 288 A1

## INTERNATIONAL SEARCH REPORT

| International application No. |
|---|
| **PCT/JP2023/037057** |

| A. | CLASSIFICATION OF SUBJECT MATTER |
|---|---|

*G06F 3/0338*(2013.01)i; *A63F 13/24*(2014.01)i
FI: G06F3/0338 411; A63F13/24

According to International Patent Classification (IPC) or to both national classification and IPC

| B. | FIELDS SEARCHED |
|---|---|

Minimum documentation searched (classification system followed by classification symbols)

G06F3/0338; A63F13/24

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2014-535102 A (SONY COMPUTER ENTERTAINMENT INC.) 25 December 2014 (2014-12-25) <br> entire text, all drawings | 1-8 |
| A | JP 2020-523673 A (SONY INTERACTIVE ENTERTAINMENT EUROPE LTD.) 06 August 2020 (2020-08-06) <br> entire text, all drawings | 1-8 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 December 2023** | **19 December 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

International application No.

**PCT/JP2023/037057**

| Patent document cited in search report | | | Publication date (day/month/year) | Patent family member(s) | | | Publication date (day/month/year) |
|---|---|---|---|---|---|---|---|
| JP | 2014-535102 | A | 25 December 2014 | US | 2013/0100021 | A1 | |
| | | | | entire text, all drawings | | | |
| | | | | WO | 2013/059472 | A1 | |
| | | | | EP | 2768589 | A1 | |
| | | | | CN | 104321115 | A | |
| JP | 2020-523673 | A | 06 August 2020 | US | 2020/0406131 | A1 | |
| | | | | entire text, all drawings | | | |
| | | | | GB | 2563243 | A | |
| | | | | WO | 2018/224801 | A1 | |
| | | | | EP | 3634591 | A1 | |
| | | | | CN | 110997088 | A | |

Form PCT/ISA/210 (patent family annex) (January 2015)